# EUROPÄISCHE PATENTSCHRIFT

(11) **EP 2 783 142 B1**
(45) Veröffentlichungstag und Bekanntmachung des Hinweises auf die Patenterteilung: **25.04.2018**
(21) Anmeldenummer: 12846800.6
(22) Anmeldetag: 20.11.2012
(51) Int. Cl.: F16K 11/074, F16K 37/00, F16K 31/54

(54) **VORRICHTUNG ZUM SCHALTBAREN VERBINDEN**
DEVICE FOR CONNECTING IN A SWITCHABLE MANNER
DISPOSITIF PERMETTANT UN RACCORDEMENT SÉLECTIONNABLE

(30) Priorität: 22.11.2011 DE 102011119021
(43) Veröffentlichungstag der Anmeldung: 01.10.2014
(73) Patentinhaber: Saier, Beatrice, 79117 Freiburg / Kappel (DE); Saier, Michael, 79117 Freiburg / Kappel (DE)
(72) Erfinder: SAIER, Michael, 79117 Freiburg / Kappel (DE); WEBER, Lothar, 53359 Rheinbach (DE)
(74) Vertreter: Roche, von Westernhagen & Ehresmann
(86) Internationale Anmeldenummer: PCT/DE2012/001101
(87) Internationale Veröffentlichungsnummer: WO 2013/075692

(56) Entgegenhaltungen:
- EP-A1- 0 674 950
- EP-A1- 2 361 691
- EP-A2- 2 107 285
- WO-A1-2004/053371
- DE-A1- 2 952 695
- DE-A1- 10 115 636
- DE-A1- 19 600 286
- DE-A1- 19 605 260
- DE-A1-102006 023 055
- DE-A1-102007 019 059
- DE-A1-102007 037 883
- DE-A1-102010 005 459
- DE-B- 1 118 981
- DE-C- 960 140
- DE-U1- 20 008 930
- DE-U1-202009 000 525
- US-A- 3 124 162

## Beschreibung

Die Erfindung betrifft eine Vorrichtung wie sie beispielsweise aus der nachveröffentlichten deutschen Patentanmeldung DE 10 2011 108 396 A1 der Anmelder bekannt ist. Bei der vorbeschriebenen Vorrichtung ist bereits die Möglichkeit erwähnt, eine Spüleinrichtung vorzusehen, um mit einem neutralen Fluid, insbesondere mit Wasser, eine Spülung vorzunehmen. Hierzu wird vorgeschlagen, Wassereinlässe nahe der Einlassöffnungen oder im Bereich des Durchgangskanals vorzusehen.

Aus der EP 0674950 A1 geht eine Vorrichtung hervor, mit der unterschiedlich farbige Harze sukzessive mittels einer Drehventilanordnung gefördert werden können. Hier ist an einer mehrere Materialeinlässe aufweisenden Eingangsscheibe eine Ausgangsseite vorgesehen, die bis auf die Einlassöffnungen vollständig glatt ausgebildet ist, und keine Nut-Anordnung aufweist. Zwischen der Eingangsscheibe und dem Drehventilkörper ist eine transversal verschiebbare Platte aus Teflon vorgesehen. Ein Spülen der Leitungen ist in dieser Druckschrift nicht beschrieben.

In der EP 2361691 A1 ist eine Fluidweiche beschrieben, die dem schnellen Wechseln unterschiedlicher Fluide auf dem Gebiet der Lackiertechnologie dient. Die Vorrichtung dieser Druckschrift weist drei Durchgangskanäle und drei Auslässe auf.

Aus der DE 10 2007 037 883 A1 geht ein Mehrfachzugabeventil für eine Anlage zum Dosieren flüssiger oder pastöser Waschhilfsmittel hervor. Hier ist kein Durchgangskanal vorgesehen, der sich von einer Eingangsseite des Stellgliedes zu einer Ausgangsseite des Stellgliedes
erstreckt. Stattdessen ist hier ein Durchgangskanal von einer U-förmigen Verbindungsleitung gebildet.

Die Erfindung stellt sich die Aufgabe, eine Vorrichtung bereitzustellen, die auf effiziente und sichere Weise dem Auslass sukzessive unterschiedliche Materialien zuführen kann, und eine verbesserte Spülung ermöglicht.

Die Erfindung löst diese Aufgabe mit den Merkmalen des Anspruches 1.

Das Prinzip der Erfindung besteht im Wesentlichen darin, eine Vorrichtung bereitzustellen, die mehrere Einlasse und wenigstens einen Auslass aufweist. Jeder der Einlasse kann mit einem Material-Vorrats-Behältnis verbunden werden, beispielsweise unter Zuhilfenahme einer Leitung, z. B. einem Schlauch. In den Behältnissen befinden sich Materialvorräte unterschiedlicher Materialien oder Medien, nämlich unterschiedlicher Fluide. Entsprechend der Zahl der Einlasse kann eine Zahl an Materialbehältnissen oder eine geringere Zahl an Behältnissen vorgesehen sein.

Der Auslass der Vorrichtung kann je nach Einsatzzweck und Anwendung der Vorrichtung über eine Leitung, z. B. eine Schlauchleitung, mit einer Zielvorrichtung verbunden sein. Die Zielvorrichtung kann beispielsweise eine Waschmaschine, insbesondere eine Textilwaschmaschine, z. B. eine Gewerbewaschmaschine oder eine Haushalts-Waschmaschine oder eine Spülmaschine, z. B. eine Geschirrspülmaschine oder eine Flaschenwaschmaschine oder eine Behälterwaschmaschine sein. Je nach Anwendungszweck der Vorrichtung, beispielsweise in der Lebensmittelbearbeitung oder - herstellung, kann die Zielvorrichtung aber auch gänzlich anderer Art sein, und beispielsweise von einem Pizzaofen, oder, bei Anwendungen in der chemischen Industrie, von einem Mischbehältnis, einem Kessel oder dergleichen bereitgestellt sein. Der Auslass der Vorrichtung kann auch derartig ausgebildet und positioniert sein, dass durch ihn hindurch unterschiedliche ätherische Öle einem Dampfstrom zum Betrieb einer Sauna zugeleitet werden.

Die Vorrichtung umfasst weiter ein relativ zu den Einlässen verlagerbares Stellglied. Es kann sich dabei beispielsweise um ein rotatorisch verlagerbares Stellglied, z. B. in Form einer Scheibe, vorzugsweise aus Keramik, handeln, oder alternativ um ein linear verlagerbares Stellglied. Das Stellglied weist einen Durchgangskanal auf, der wahlweise mit jeweils einem der unterschiedlichen Einlässe in kommunikative Verbindung bringbar ist.

Auf der die Dichtfunktion bereitstellenden Eingangsseite des verlagerbaren Stellgliedes kann ein Gleitmittel, z. B. ein Kriechöl oder ein Fett, eingesetzt werden. Dies gilt auch für den Fall, dass das Stellglied aus keramischem Material besteht.

Vorzugsweise stromabwärts des Durchgangskanals ist wenigstens eine Pumpe angeordnet.

Befindet sich der Durchgangskanal in kommunikativer Verbindung mit einem Einlass, kann durch Ansprechen der Pumpe im Durchgangskanal ein Unterdruck erzeugt werden und durch den jeweiligen Einlass hindurch das entsprechende Material ausgetragen, in den Durchgangskanal hinein eingetragen, und zum Auslass hin transportiert werden.

In den Behältnissen können sich vorzugsweise unterschiedliche Materialien oder Medien befinden, z. B. unterschiedliche Fluide, die nicht miteinander in Kontakt treten dürfen oder sollen, und die getrennt voneinander untergebracht werden sollen, z. B. weil sie aggressiv, oder explosiv, oder reaktiv sind.

Um diese unterschiedlichen Materialien in der gewünschten Menge und zum gewünschten Zeitpunkt zu der Zielvorrichtung hin zu transportieren, und um zu verhindern, dass sich Rückstände in dem Durchgangskanal oder im Bereich der Leitung zwischen Auslass und Zielvorrichtung miteinander ungewünscht mischen oder miteinander reagieren, ist gemäß der Erfindung eine Spüleinrichtung vorgesehen. Dieser Spüleinrichtung ist ein Spülmitteleinlass zugeordnet, durch den Spülmittel in die Vorrichtung eingetragen werden kann. Wenigstens einer der Einlässe der Vorrichtung ist als Spülmitteleinlass ausgebildet. Infolge einer Verlagerung des Stellgliedes kann der Durchgangskanal daher nicht nur Materialeinlässe, sondern auch wenigstens einen Spülmitteleinlass, vorzugsweise einen von mehreren Spülmitteleinlässen, anfahren. Hat der Durchgangskanal einen Spülmitteleinlass angefahren, befindet sich der Durchgangskanal mit dem Spülmitteleinlass in kommunikativer Verbindung und kann gespült werden. Zugleich mit der Spülung des Durchgangskanals kann auch eine Spülung des Auslasses erfolgen, sowie eine Spülung der stromabwärts des Auslasses befindlichen Leitung oder eines Abschnittes dieser Leitung und / oder z. B. einer stromabwärts des Auslasses angeordneten Pumpe.

Eine Spülung kann mit einem geeigneten Spülmittel, z. B. mit Frischwasser oder Brauchwasser, oder mit einem anderen Medium erfolgen, dies in Abhängigkeit des Anwendungszweckes der Vorrichtung. Durch Ausbildung wenigstens eines der Einlässe als Spülmitteleinlass einer Spüleinrichtung, kann auf besonders günstige Weise eine Einspeisung eines Spülmittels stromaufwärts des Durchgangskanals erreicht werden. Um eine Spülmitteleinspeisung durchzuführen, genügt es, das Stellglied zu verlagern, und eine Position anzufahren, in der der Durchgangskanal in kommunikativer Verbindung mit einem Spülmitteleinlass steht.

Vorteilhaft kann vorgesehen sein, dass zwischen jeweils zwei Materialeinlassöffnungen eine Spülmitteleinlassöffnung angeordnet ist. Jedes mal, wenn ein Fluid, also beispielsweise eine Chemikalie, in den Durchgangskanal eingetragen worden ist, und nachfolgend das Stellglied verfahren wird, um eine andere Einlassöffnung anzufahren, um einen weiteren Materialeintrag vorzunehmen, kann eine Spülmitteleinlassöffnung von dem Durchgangskanal überfahren werden, so dass z. B. zwangsläufig ein Spülgang erfolgt, bevor ein weiterer Materialeintrag erfolgt, oder alternativ zumindest eine Möglichkeit besteht, einen Spülgang durchzuführen. Unter bestimmten Umständen kann es auch gewünscht sein, beispielsweise bei der Durchführung besonderer Waschprogramme, dass zwei unterschiedliche Materialien sich bereits im Durchgangskanal oder jedenfalls frühzeitig mischen, ohne dass ein Spülgang erforderlich oder gewünscht ist.

Alternativ kann vorgesehen sein, dass zwischen jeweils zwei Paaren von Materialeinlassöffnungen eine Spülmitteleinlassöffnung angeordnet ist. So kann durch eine Stellgliedverlagerung um einen sehr geringen Drehwinkel eine Spülmitteleinlassöffnung angefahren werden.

Die erfindungsgemäße Ausbildung wenigstens eines der Einlässe als Spülmitteleinlass bringt darüber hinaus besondere Vorteile hinsichtlich der Gewährleistung von Dichtigkeiten mit sich. Zur Abdichtung des Spülmitteleinlasses oder im Falle mehrerer Spülmitteleinlässe der Abdichtung dieser mehreren Spülmitteleinlassöffnungen gegenüber dem Außenraum, kann dieselbe Dichtfläche des Stellgliedes eingesetzt werden, die - je nach Verlagerungsposition des Stellgliedes - auch zur Abdichtung der Materialeinlassöffnungen gegenüber dem Außenraum dient. Es kann also eine insgesamt hohe Dichtigkeit der Vorrichtung bei einfacher Bauweise der Vorrichtung erzielt werden.

Gemäß einer vorteilhaften Ausgestaltung der Erfindung weist die Spüleinrichtung einen Spülmittelverteilerkanal auf. Dieser kann einen gemeinsamen Spülmittelvorrat mit mehreren Spülmitteleinlässen oder Spülmitteleinlassöffnungen verbinden. Beispielsweise besteht die Möglichkeit, die Vorrichtung aus zwei relativ zueinander verdrehbaren Keramikscheiben oder aus einem anderen Material bestehenden Scheiben aufzubauen. Eine Eingangsscheibe weist auf ihrer Eingangsseite eine Reihe von Materialeinlässen und einen gemeinsamen Spülmitteleinlass auf. Die Ausgangsseite der Eingangsscheibe weist eine der Zahl der Materialeinlässe entsprechende Zahl von Öffnungen auf, und eine Anordnung einer halb offenen Nut mit mehreren sternförmig angeordneten Nut-Fortsätzen. Diese Nut ist insgesamt als Spülmittel-Nut ausgebildet. Jeder der Nut-Fortsätze erstreckt sich zwischen zwei Materialeinlassöffnungen. Auf diese Weise ist zwischen jeweils zwei Materialeinlassöffnungen eine Spülmitteleinlassöffnung angeordnet.

Gemäß einem weiteren Aspekt wird ein Verfahren zum schaltbaren Verbinden jeweils eines Einlasses mit einem Auslass offenbart, mit dem auf besonders einfache und sichere Weise einem Auslass sukzessive unterschiedliche Materialien zugeführt werden können.

Gemäß einem ersten Verfahrensschritt wird das Stellglied, also beispielsweise eine aus Keramik bestehende Scheibe einer Vorrichtung gemäß Anspruch 1, verlagert. Es erfolgt eine Verlagerung des Stellgliedes in eine erste Position. In dieser Position kann ein Durchgangskanal, welcher Bestandteil des Stellgliedes ist, also beispielsweise Bestandteil der Ausgangsscheibe, mit einem ersten Einlass in kommunikative Verbindung gebracht werden. Der erste Einlass ist mit einem Vorratsbehältnis eines ersten Materials oder Mediums verbunden.

Gemäß einem weiteren Schritt wird eine Pumpe betrieben. Die Pumpe ist insbesondere stromabwärts des Auslasses angeordnet. Es kann sich beispielsweise um eine Schlauchpumpe handeln.

Durch Betreiben der Pumpe wird Material, das sogenannte erste Material, aus dem Einlass heraus in den Durchgangskanal eingetragen sowie gegebenenfalls, je nach Größe des Volumens, auch in die Leitungsabschnitte, die stromabwärts des Durchgangskanals angeordnet sind. Es erfolgt ein Eintrag in den Durchgangskanal entsprechend einer vorgegebenen Zeitdauer oder - unter Berücksichtigung der Pumpenleistung - bis ein vorherbestimmtes Eintragvolumen erreicht ist.

Anschließend wird gemäß einem weiteren Verfahrensschritt das Stellglied in eine geänderte, zweite Position verlagert. In dieser zweiten Position befindet sich der Durchgangskanal nicht mehr in kommunikativer Verbindung mit dem ersten Einlass. Insbesondere ist in dieser zweiten Position des Stellgliedes der erste Einlass gegenüber dem Außenraum abgedichtet. Weiter vorteilhaft kann das in zweiter Position befindliche Stellglied eine kommunikative Verbindung des Durchgangskanals mit einem Spülmitteleinlass bereitstellen.

Gemäß einem weiteren Verfahrensschritt wird nun bei in zweiter Position des Stellgliedes befindlichem Durchgangskanal Spülmittel in den Durchgangskanal eingebracht. Diese Einbringung erfolgt, um den Durchgangskanal zu spülen.

Das Verfahren kann des Weiteren derartig durchgeführt werden, dass jedes Mal, nachdem eine Verlagerung des Stellgliedes in eine Position erfolgt ist, um aus einem Materialeinlass Material in den Durchgangskanal einzubringen, eine weitere Verlagerung erfolgt, um einen Spülgang durchzuführen. Weiter vorteilhaft wird das Verfahren derartig betrieben, dass jedes Mal nach einem Materialeintrag in den Durchgangskanal ein Spülmitteleintrag erfolgt.

Vorteilhafterweise erfolgt eine Verlagerung des Stellgliedes regelmäßig, d. h. innerhalb einer vorgegebenen Zeitdauer, von z. B. 24 Stunden, wenigstens einmalig. Eine Bewegung des Stellgliedes erfolgt insoweit zu Wartungszwecken selbst dann, wenn sich die Vorrichtung nicht in Betrieb befindet. Durch eine derartige regelmäßige Verlagerung des Stellgliedes gegenüber der Eingangsscheibe kann verhindert werden, dass die maßgeblichen Dichtflächen unwirksam werden, oder die z. B. keramischen Oberflächen aneinander anhaften und beispielsweise einem Kaltverschweißen unterliegen.

Gemäß einem weiteren Aspekt wird eine Vorrichtung bereitgestellt, die auf effiziente und sichere Weise dem Auslass sukzessive unterschiedliche Materialien zuführen kann.

Diese ist dadurch gekennzeichnet, dass zur Spülung des Durchgangskanals eine Spüleinrichtung vorgesehen ist, die unter Zwischenschaltung einer Rohrtrenneinrichtung mit dem Leitungswassernetz verbunden ist.

Zur Vermeidung von Wiederholungen wird, was die Definition der verwendeten Begriffe angeht, auf die obigen Ausführungen verwiesen.

Die Spüleinrichtung umfasst vorzugsweise ein Behältnis, in dem sich als Spülmittel Wasser befindet. Das Wasserbehältnis ist über eine Schlauchleitung oder eine andere geeignete Leitung mit dem Spülmitteleinlass verbunden. Die Rohrtrenneinrichtung verfügt über einen Anschluss an das Leitungswassernetz. Dieser Anschluss umfasst beispielsweise ein von einer Steuerung schaltbares, d. h. öffnenbares und schließbares, Ventil. Die Steuerung ist darüber hinaus mit zwei Niveausensoren verbunden, die beispielsweise ein oberes und ein unteres Niveau im Wasserbehältnis feststellen können. Sobald durch Entnahme von Wasser aus dem Behältnis das untere Niveau erreicht oder unterschritten wird, kann die Steuerung dies feststellen, und das Ventil zum Leitungswassernetz im Sinne einer Öffnung ansprechen. Das durch das geöffnete Ventil hindurch strömende Wasser kann eine Fallstrecke durchfallen, und das Behältnis füllen, bis das obere Niveau erreicht ist. Dies wird von der Steuerung festgestellt, mit der Folge, dass das Ventil geschlossen wird.

Bei einer alternativen Ausgestaltung der Erfindung umfasst die Rohrtrenneinrichtung lediglich einen Niveausensor. Hier kann über die Steuerung beispielsweise bei Erreichen oder Unterschreiten eines vorbestimmten Niveaus und einer entsprechenden Detektion durch den einzigen Niveausensor veranlasst werden, dass für eine bestimmte Zeitdauer das Ventil geöffnet wird, so dass ein vorher bestimmtes Volumen in das Wasserbehältnis nachgefüllt wird.

Das im Spülmittelbehältnis befindliche Wasser befindet sich also nicht in unmittelbarer kommunikativer Verbindung mit dem Leitungswassernetz, sondern ist von diesem über eine Fallstrecke getrennt. Damit wird verhindert, dass Verunreinigungen, Chemikalien, Keime oder dergleichen durch einen Rückfluss ins Trinkwassernetz gelangen können.

Schließlich kann bei einer alternativen Ausgestaltung der Erfindung auch ein Funktionsbereich der Vorrichtung selbst als Rohrtrenneinrichtung fungieren. Hierzu ist die Vorrichtung vorzugsweise derartig ausgebildet, dass sie unterschiedliche Strömungspfade bereitstellt, wobei gewährleistet ist, dass die beiden Strömungspfade miteinander nicht in kommunikative Verbindung geraten können. Beispielsweise kann der Vorrichtung ein zweiter Auslass zugeordnet werden, der mit dem Spülmittelbehältnis verbunden ist, wobei das Spülmittelbehältnis mit dem Spülmitteleinlass in kommunikativer Verbindung steht. Die wenigstens zwei unterschiedlichen und dauerhaft streng voneinander getrennten Strömungspfade durch die Vorrichtung hindurch können beispielsweise durch eine Drehwinkelbegrenzung des Stellgliedes um beispielsweise 180° erreicht werden.

Gemäß einem weiteren Aspekt wird eine Vorrichtung bereitgestellt, die auf effiziente und sichere Weise dem Auslass sukzessive unterschiedliche Materialien zuführen kann.

Diese ist dadurch gekennzeichnet, dass stromabwärts des Auslasses eine Einrichtung zur Durchflussmessung angeordnet ist.

Die Besonderheit besteht darin, dass stromabwärts des Auslasses eine Einrichtung zur Durchflussmessung angeordnet ist. Es kann sich dabei um eine Einrichtung handeln, die das Durchflussvolumen, also die Durchflussmenge misst oder überwacht. Alternativ kann auch eine Zeitmessung erfolgen, was insbesondere zur Bestimmung des durchgeflossenen Volumens ausreicht, wenn die Durchflussströme bekannt sind. Diese hängen insbesondere auch von der Pumpenleistung, gegebenenfalls auch noch von weiteren Parametern ab. Die Einrichtung zur Durchflussmessung ist stromabwärts des Auslasses, insbesondere nahe der Pumpe, angeordnet. Bei der Pumpe kann es sich um eine beliebige geeignete Pumpe, z. B. um eine Schlauchpumpe, handeln.

Die Einrichtung zur Durchflussmessung kann insbesondere auch mit einem Rechner verbunden sein, der Protokolle oder Dokumentationen erstellt oder auf den zur Erstellung von Protokollen oder Dokumentationen zurückgegriffen werden kann. Die erstellten Dokumentationen können dazu verwendet werden, festzustellen, beziehungsweise nachzuweisen, welche Materialien, z. B. welche Chemikalien, zu welchen Zeiträumen oder in welchen Mengen verwendet worden sind. Damit ist die Erbringung von Verwendungsnachweisen möglich.

Gemäß einem weiteren Aspekt wird eine Vorrichtung bereitgestellt, die auf effiziente und sichere Weise dem Auslass sukzessive unterschiedliche Materialien zuführen kann.

Diese ist dadurch gekennzeichnet, dass eine Einrichtung zur Erfassung der Position des Stellgliedes vorgesehen ist.

Eine wesentliche Besonderheit besteht darin, dass eine Einrichtung zur Erfassung der Position des Stellgliedes vorgesehen ist. Diese Einrichtung dient dazu, einer Steuerung die Möglichkeit bereitzustellen, darüber Aufschluss zu erlangen, in welcher Position sich das Stellglied zu einem bestimmten Zeitpunkt befindet und/oder welche Maßnahmen die Steuerung vornehmen muss, um infolge einer Verlagerung des Stellgliedes eine bestimmte Materialeinlassöffnung oder eine bestimmte Spülmitteleinlassöffnung anzufahren.

Vorzugsweise erfolgt eine ständige oder permanente Positionserfassung des Stellgliedes. Bei einer alternativen Ausgestaltung kann die Erfassung der Position des Stellgliedes auch periodisch, d. h. regelmäßig, oder zu vorher bestimmten geeigneten Zeitpunkten erfolgen.

Die Einrichtung zur Erfassung der Position des Stellgliedes kann beispielsweise eine Messeinrichtung erfassen, die auf optische, induktive, kapazitive, elektrische, magnetische oder andere physikalische Weise unmittelbar die Position des Stellgliedes feststellt. Hierzu können beispielsweise auch Markierungen, z. B. optische, magnetische, elektrische oder andere Markierungen an dem Stellglied angebracht oder mit dem Stellglied verbunden sein.

In diesem Zusammenhang besteht grundsätzlich auch die Möglichkeit, eine Steuerung des Stellgliedes unter Zuhilfenahme eines sogenannten referenzierten Schrittmotors vorzunehmen, d. h. eines besonderen Schrittmotors, der über eine Referenzposition verfügt, und der jeweils so angesprochen werden kann, dass die Steuerung weiss, in welcher Position sich das von dem Schrittmotor angetriebene Stellglied befindet, beziehungsweise, genau genommen, in welcher Position sich der Durchgangskanal befindet.

Es sei darauf hingewiesen, dass die Einrichtung zur Erfassung der Position des Stellgliedes auch mit einer Zähleinrichtung ausgestattet sein kann, um beispielsweise Drehwinkelbereiche zu messen oder zu zählen, um die sich das Stellglied ausgehend von einer Differenzposition verlagert.

In diesem Zusammenhang sei auch darauf hingewiesen, dass theoretisch die Möglichkeit besteht, das Stellglied mit mehr als einem Durchgangskanal auszustatten.

Des Weiteren wird eine Vorrichtung bereitgestellt, die auf effiziente und sichere Weise dem Auslass sukzessive unterschiedliche Materialien zuführen kann.
Diese ist dadurch gekennzeichnet, dass dem Stellglied eine Verzahnung, wie Zahnrad oder Zahnstange, zugeordnet ist, die mit einem von einem Antrieb zum Zwecke einer Verlagerung des Stellgliedes ansprechbaren Zahnrad kooperiert.

Ein weiterer Aspekt besteht darin, dass dem Stellglied eine Verzahnung zugeordnet ist. Die Verzahnung kann unmittelbar in das Stellglied eingearbeitet sein. Alternativ kann eine Verzahnung, z. B. auch aus einem anderen Material, als dem Material, aus dem das Stellglied besteht, an dem Stellglied befestigt sein. Beispielsweise kann im Falle eines im Wesentlichen scheibenförmigen Stellgliedes aus z. B. Keramik die Verzahnung aus Kunststoff oder Metall, insbesondere von einem Zahnradkranz, gebildet sein, der das Stellglied mit seiner Außenumfangsfläche umgibt.

Falls das Stellglied rotatorisch verlagerbar ausgebildet ist, bietet es sich an, die Verzahnung von einem Zahnkranz bereitzustellen. Für den Fall, dass das Sperrglied linear verlagerbar ausgebildet ist, bietet es sich an, das Stellglied mit einer Zahnstange zu versehen.

Der Antrieb zur Verlagerung des Stellgliedes kann vorzugsweise mit einem Zahnrad zusammenwirken, bzw. ein solches Zahnrad im Sinne einer Drehbewegung ansprechen. Das Zahnrad kann mit der Verzahnung kooperieren und auf diese Weise das Stellglied verlagern.

Gemäß einem weiteren Aspekt wird eine Vorrichtung bereitgestellt, die auf effiziente und sichere Weise den Auslässen sukzessive Material zuführen kann.

Ein wesentlicher Aspekt besteht darin, dass eine Vorrichtung mit mehreren Einlässen und einem Auslass, wobei die Einlässe jeweils mit einem Material-Vorrats-Behältnis verbindbar sind, und wobei zur Bereitstellung einer schaltbaren Verbindung zwischen jeweils einem der mehreren Einlässe und dem Auslass ein relativ zu den Einlässen verlagerbares Stellglied mit einem Durchgangskanal vorgesehen ist, wobei der Durchgangskanal wahlweise mit jeweils einem der unterschiedlichen Einlässe in kommunikative Verbindung bringbar ist, um dem Auslass sukzessive unterschiedliche Materialien zuführen zu können, in einer geometrisch invertierten Anordnung eingesetzt wird. Der Auslass der vorbeschriebenen Vorrichtung fungiert nun als Einlass und die mehreren Einlässe der vorbekannten Vorrichtung fungieren nun als mehrere Auslässe und im Übrigen wird der konstruktive Aufbau der Vorrichtung nicht geändert. Insbesondere kann auf die zuvor beschriebene und auch in den Ausführungsbeispielen detailliert beschriebene Weise ein Stellglied verlagert werden, um den Einlass jeweils mit einem der Auslässe kommunikativ zu verbinden.

Gemäß einem weiteren Aspekt ist eine Vorrichtung mit mehreren Einlässen und einem Auslass, wobei die Einlässe jeweils mit einem Material-Vorrats-Behältnis verbindbar sind, und wobei zur Bereitstellung einer schaltbaren Verbindung zwischen jeweils einem der mehreren Einlässe und dem Auslass ein relativ zu den Einlässen verlagerbares Stellglied mit einem Durchgangskanal vorgesehen ist, wobei der Durchgangskanal wahlweise mit jeweils einem der unterschiedlichen Einlässe in kommunikative Verbindung bringbar ist, um dem Auslass sukzessive unterschiedliche Materialien zuführen zu können, mit einer weiteren Vorrichtung mit mehreren Einlässen und einem Auslass, wobei die Einlässe jeweils mit einem Material-Vorrats-Behältnis verbindbar sind, und wobei zur Bereitstellung einer schaltbaren Verbindung zwischen jeweils einem der mehreren Einlässe und dem Auslass ein relativ zu den Einlässen verlagerbares Stellglied mit einem Durchgangskanal vorgesehen ist, wobei der Durchgangskanal wahlweise mit jeweils einem der unterschiedlichen Einlässe in kommunikative Verbindung bringbar ist, um dem Auslass sukzessive unterschiedliche Materialien zuführen zu können, in serieller Schaltung verknüpft, derart, dass der Auslass einer ersten Vorrichtung mit einem Einlass der zweiten Vorrichtung gekoppelt ist. Auch weitere Vorrichtungen können seriell angeschlossen werden. Hierdurch können beliebig viele unterschiedliche MaterialVorratsbehältnisse an die Vorrichtung angeschlossen werden und eine entsprechend wählbare Gesamtzahl an miteinander mischbaren, bzw. sukzessive einem Zielbehältnis zuführbaren unterschiedlichen Medien erhalten werden.

Gemäß einem weiteren Aspekt wird eine Vorrichtung bereitgestellt, die auf effiziente und sichere Weise dem Auslass sukzessive unterschiedliche Materialien zuführen kann.

Die Anordnung einer Einrichtung zur Messung der Leitfähigkeit stromabwärts des Auslasses bietet die Möglichkeit, das der Zielvorrichtung oder den Zielvorrichtungen zugeführte Medium sicher zu überwachen, jedenfalls soweit eine Messung der Leitfähigkeit einen Rückschluss auf die besondere Art oder Eigenschaft des zugeführten Mediums zulässt.

Weitere Vorteile der Erfindung ergeben sich aus den nicht zitierten Unteransprüchen, sowie aus der nachfolgenden Beschreibung der in den Zeichnungen dargestellten Ausführungsbeispiele der Erfindung. In den Zeichnungen zeigen:
- Fig. 1: In einer schematischen, teilgeschnittenen Ansicht, ein erstes Ausführungsbeispiel eines Stellgliedes einer erfindungsgemäßen Vorrichtung,
- Fig. 2: eine Rückansicht, d. h. eine Ansicht der Ausgangsseite, des Stellgliedes der Figur 1 gemäß Ansichtspfeil II in Figur 1,
- Fig. 3: eine Vorderansicht des Stellgliedes der Figur 1 gemäß Ansichtspfeil III in Figur 1,
- Fig. 4: eine perspektivische Ansicht des Stellgliedes etwa gemäß Ansichtspfeil IV in Figur 1,
- Fig. 5: eine Seitenansicht der Eingangsscheibe eines Ausführungsbeispiels der erfindungsgemäßen Vorrichtung,
- Fig. 6: eine Vorderansicht der Eingangsscheibe, also eine Ansicht der Eingangsseite der Eingangsscheibe gemäß Ansichtspfeil VI in Figur 5,
- Fig. 7: eine teilgeschnittene Ansicht durch die Eingangsscheibe etwa entlang Schnittlinie VII - VII in Figur 6,
- Fig. 8: eine Ansicht der Ausgangsseite der Eingangscheibe gemäß Ansichtspfeil VIII in Figur 7,
- Fig. 9: eine teilgeschnittene Ansicht durch die Eingangsscheibe der Figur 8 gemäß Schnittlinie IX-IX in Figur 8,
- Fig. 10: eine perspektivische Ansicht der Eingangsscheibe gemäß Ansichtspfeil X in Figur 7,
- Fig. 11: in einer schematischen Darstellung ein Ausführungsbeispiel einer erfindungsgemäßen Vorrichtung in zusammengebautem Zustand mit Eingangsscheibe, Stellglied und Gehäuse,
- Fig. 12: eine schematische Ansicht der zusammengebauten Vorrichtung etwa entlang Ansichtspfeil XII in Figur 11,
- Fig. 13: eine zusammengebaute Vorrichtung in schematischer Darstellung etwa gemäß Schnittlinie XIII - XIII in Figur 12,
- Fig. 14: eine perspektivische Ansicht der Vorrichtung etwa gemäß Ansichtspfeil XIV in Figur 11,

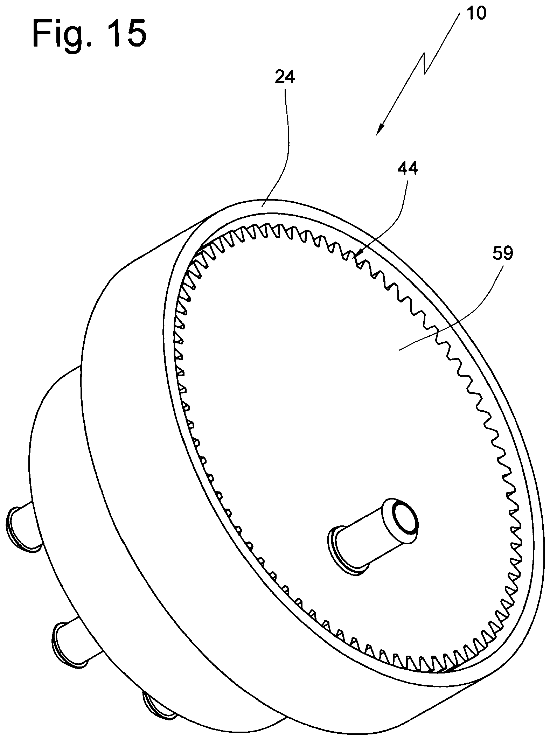

- Fig. 15: eine perspektivische Rückansicht etwa gemäß Anischtspfeil XV in Figur 11,
- Fig. 16: ein weiteres Ausführungsbeispiel einer erfindungsgemäßen Vorrichtung in schematischer, blockschaltbildartiger Darstellung, mit einer als Waschmaschine ausgebildeten Zielvorrichtung und einer Vielzahl von angedeuteten Material-Vorrats-Behältnissen und eines Spülmittel-Behältnisses,
- Fig. 17: in einer schematischen Darstellung ein Ausführungsbeispiel einer stromaufwärts der erfindungsgemäßen Vorrichtung angeordneten Rohr-Trenneinrichtung, sowie dem Spülmittelbehältnis der Figur 16,
- Fig. 18: ein weiteres Ausführungsbeispiel einer erfindungsgemäßen Vorrichtung in einer Darstellung ähnlich der Figur 13, wobei zusätzlich noch ein Antrieb und ein Antriebszahnrad und weitere Details der in der Figurenbeschreibung erläuterten Elemente dargestellt sind.
- Fig. 19: ein weiteres Ausführungsbeispiel einer erfindungsgemäßen Vorrichtung in einer Darstellung gemäß Figur 18, wobei hier ein geändertes Positionsmarkierungselement und eine geänderte Einrichtung zur Positionserfassung des Stellgliedes vorgesehen ist,
- Fig. 20: eine vergrößerte Einzeldarstellung des bei diesem Ausführungsbeispiel verwendeten Positionsmarkierungselementes, etwa entlang Ansichtslinie XX in Figur 19,
- Fig. 21: ein weiteres Ausführungsbeispiel einer erfindungsgemäßen Vorrichtung, bei der die Vorrichtung geometrisch invertiert eingesetzt wird,
- Fig. 22: ein weiteres Ausführungsbeispiel einer erfindungsgemäßen Vorrichtung, bei der eine Reihen- oder Serienschaltung derartig getroffen worden ist, dass zwei erfindungsgemäße Vorrichtungen mit ihren Auslässen aufeinander zugewandt angeordnet sind, um eine Vielzahl von schaltbaren Kommunikationswegen zu erreichen,
- Fig. 23: ein weiteres Ausführungsbeispiel einer Eingangsscheibe eines alternativen Ausführungsbeispiels einer erfindungsgemäßen Vorrichtung in einer perspektivischen Vorderansicht, ähnlich der Darstellung der Fig. 6,
- Fig. 24: eine perspektivische Rückansicht der Eingangsscheibe der Fig. 23,
- Fig. 25: ein weiteres Ausführungsbeispiel eines Stellgliedes einer alternativen Ausgestaltung einer erfindungsgemäßen Vorrichtung in Vorderansicht, in einer Darstellung analog Fig. 3,
- Fig. 26: eine perspektivische Rückansicht des Stellgliedes der Fig. 25,
- Fig. 27: ein weiteres Ausführungsbeispiel einer erfindungsgemäßen Vorrichtung im zusammengebauten Zustand unter Verwendung der Eingangsscheibe der Fig. 23 und des Stellgliedes der Fig. 25 in perspektivischer Ansicht,
- Fig. 28: die zusammengebaute Vorrichtung der Fig. 27 in Vorderansicht, gemäß Ansichtspfeil XXVIII in Fig. 27,
- Fig. 29: ein weiteres Ausführungsbeispiel einer Eingangsscheibe einer erfindungsgemäßen Vorrichtung in einer Darstellung analog Fig. 24,
- Fig. 30: ein weiteres Ausführungsbeispiel einer erfindungsgemäßen Vorrichtung in einer Darstellung gemäß Fig. 28 unter Verwendung einer Eingangsscheibe der Fig. 29,
- Fig. 31: ein weiteres Ausführungsbeispiel eines Stellgliedes für ein weiteres Ausführungsbeispiel einer erfindungsgemäßen Vorrichtung in einer Darstellung gemäß Fig. 26 in Rückansicht,
- Fig. 32: das Stellglied der Fig. 31 in Vorderansicht in einer Darstellung ähnlich der Darstellung der Fig. 25,
- Fig. 33: ein weiteres Ausführungsbeispiel einer Eingangsscheibe für eine erfindungsgemäße Vorrichtung in Vorderansicht, ähnlich einer Darstellung gemäß Fig. 24,
- Fig. 34: die Eingangsscheibe der Fig. 33 in Rückansicht,
- Fig. 35: ein weiteres Ausführungsbeispiel einer erfindungsgemäßen Vorrichtung im zusammengebauten Zustand in einer schematischen Schnittansicht in einer Darstellung, vergleichbar der Darstellung der Fig. 13, und
- Fig. 36: die Vorrichtung der Fig. 35 in einer perspektivischen Vorderansicht.

Mehrere Ausführungsbeispiele der erfindungsgemäßen Vorrichtung werden nachfolgend unter Bezugnahme auf die Zeichnungen beschrieben. Der Übersichtlichkeit halber wird darauf hingewiesen, das gleiche oder miteinander vergleichbare Teile oder Elemente der Vorrichtung, auch soweit unterschiedliche Ausführungsbeispiele betroffen sind, mit gleichen Bezugszeichen, teilweise unter Hinzufügung kleiner Buchstaben, bezeichnet sind.

Jedes der beschriebenen Ausführungsbeispiele liest sich - soweit keine technischen Widersprüche auftreten - als Ausführungsbeispiel der im unabhängigen Anspruch geschilderten Erfindung. Weiter sei angemerkt, dass technische Merkmale oder Elemente oder Teile, die in den nachfolgenden Figuren nur bezüglich eines oder mehrerer Ausführungsbeispiele beschrieben sind, soweit keine technischen Widersprüche bestehen, im Rahmen der Erfindung auch bei den jeweils anderen Ausführungsbeispielen vorgesehen sein können.

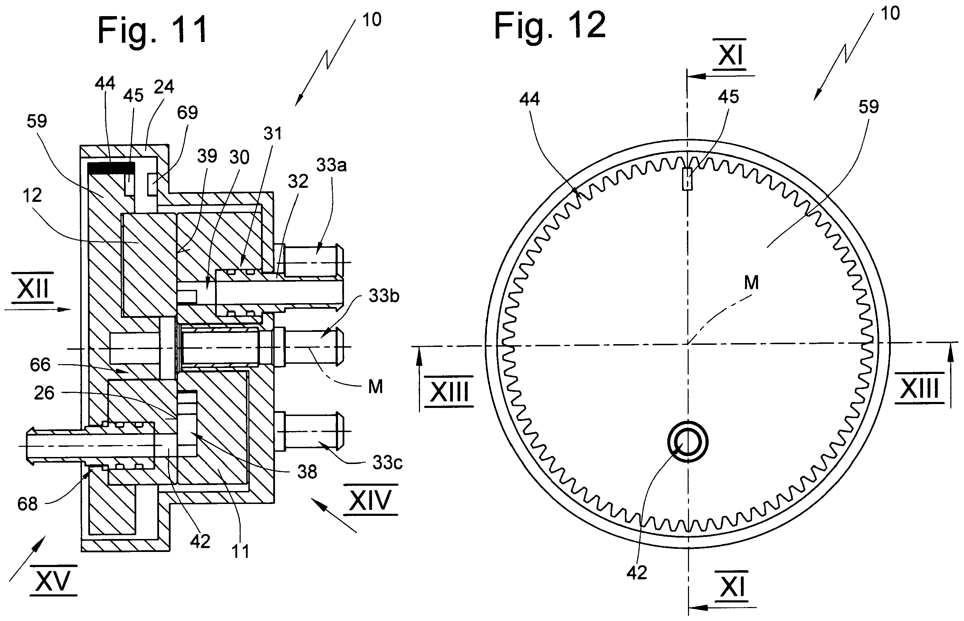

Die erfindungsgemäße Vorrichtung ist - auch soweit unterschiedliche Ausführungsbeispiele betroffen sind - insgesamt mit 10 bezeichnet. Sie ist in einer schematischen Schnittdarstellung in Figur 11 dargestellt und umfasst zwei wesentliche, zentrale Elemente in Form einer Eingangsscheibe 11 und eines Stellgliedes 12.

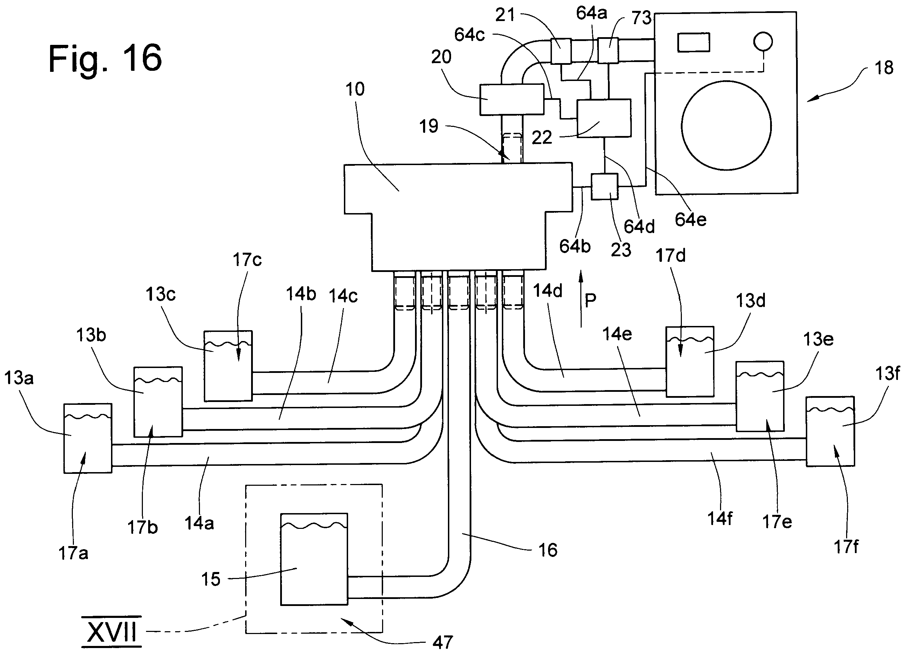

Die Vorrichtung weist eine kompakte Bauweise auf und ist, wie in Figur 16 angedeutet, mit einer Vielzahl von Material-Vorrats-Behältnissen 13a, 13b, 13c, 13d, 13e, 13f über Leitungen 14a, 14b, 14c, 14d, 14e, 14f verbunden. Erwähnenswert ist auch ein Spülmittel-Behältnis 15 und eine dieses anbindende Leitung 16.

In den unterschiedlichen Behältnissen 13a, 13b, 13c, 13d, 13e, 13f sind unterschiedliche Materialien oder Medien 17a, 17b, 17c, 17d, 17e, 17f untergebracht. Es handelt sich dabei um Fluide, die durch die Leitungen unter Zuhilfenahme von Pumpen transportiert werden können.

Die unterschiedlichen Materialien 17a, 17b, 17c, 17d, 17e, 17f können z. B. unterschiedliche Waschmittelbestandteile, unterschiedliche Konzentrate, Waschwirkstoffe, unterschiedliche Enzyme, unterschiedliche Tenside, unterschiedliche Tensidmischungen, unterschiedliche Flüssigkeiten, etc. sein. Die vorgenannte Aufzählung unterschiedlicher Materialien betrifft den Fall, dass die Zielvorrichtung 18, also diejenige Vorrichtung, die mit einem Auslass 19 der Vorrichtung 10 verbunden ist, eine in Figur 16 angedeutete Waschmaschine, z. B. eine Haushaltswaschmaschine oder eine Gewerbewaschmaschine ist.

Bei anderen Anwendungsgebieten, beispielsweise in der Lebensmittelindustrie, bei denen die Vorrichtung 10 z. B. dazu dient, unterschiedliche Lebensmittel-Zutaten zu mischen, sind andere Materialien von Interesse und in den Behältnissen 13a, 13b, 13c, 13d, 13e, 13f untergebracht.

Die Vorrichtung 10 dient im Wesentlichen dazu, die unterschiedlichen Materialien 17a, 17b, 17c, 17d, 17e, 17f dosiert zu gewünschten Zeitpunkten einem gemeinsamen Auslass 19 zuzuführen. Bevor eine Zufuhr zu dem Auslass 19 erfolgt, sollen die Materialien getrennt voneinander, ohne dass sie sich miteinander vermischen können, oder miteinander reagieren können, untergebracht sein. Man spricht auch von Phasentrennung. Dies wird insbesondere verständlich, wenn man berücksichtigt, dass unterschiedliche Chemikalien, die chemische Aggressivität oder Reaktivität aufweisen, erst zu einem bestimmten vorgegebenen Zeitpunkt miteinander in Kontakt gebracht werden dürfen oder der Waschmaschine 18 oder einer anderen Zielvorrichtung zugeführt werden dürfen.

Unter Bezugnahme auf Figur 16 sei angemerkt, dass die Flussrichtung des Fluidstroms durch die Vorrichtung 10 hindurch insgesamt mit dem Pfeil P bezeichnet ist.

Stromabwärts des Auslasses 19 ist eine Pumpe 20 vorgesehen, die z. B. von einer Schlauchpumpe bereitgestellt sein kann. Stromabwärts oder stromaufwärts der Pumpe 20, gemäß Figur 16 aber stromabwärts des Auslasses 19, ist eine Einrichtung 21 zur Durchfluss-Messung vorgesehen. Die Einrichtung 21 kann über eine Signalleitung und/oder Steuerleitung 64a mit einer lediglich angedeuteten Rechnereinheit 22 in Verbindung stehen, die die Durchflussmengen beispielsweise protokolliert. Auch die Pumpe 20 kann über eine Signalleitung und/oder Steuerleitung 64c mit der Rechnereinheit 22 verbunden sein.

Die Vorrichtung 10 verfügt vorteilhaft über eine Steuerung 23, die mit der Vorrichtung 10, wie Figur 16 lediglich andeutet, über eine weitere Signal- und/oder Steuerleitung 64b verbunden ist.

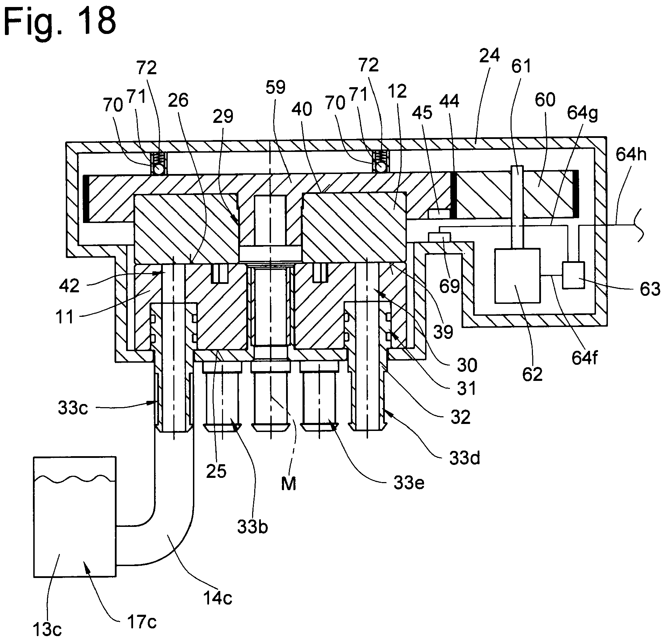

Die Steuerung 23 kann beispielsweise einen in Figur 16 nicht dargestellten, aber in Figur 18 angedeuteten Antrieb 62 der Vorrichtung 10 ansteuern. Die Steuerung 23 kann des Weiteren mit der Zielvorrichtung 18, beispielsweise mit einer in der Zielvorrichtung 18 angeordneten Steuerung über eine weitere Signal- und/oder Steuerleitung 64e verbunden sein. Die Steuerung 23 kann auch Bestandteil der Zielvorrichtung 18 sein.

Auch die Vorrichtung 10 kann Bestandteil der Zielvorrichtung 18 sein, oder in oder an ihr angeordnet sein. Schließlich kann die Steuerung 23 auch mit der Recheneinheit 22 über eine weitere Signal- und/oder Steuerleitung 64d verbunden sein. Wie bereits das Blockschaltbild in Figur 16 deutlich macht, können die Recheneinheiten 22 und die Steuerung 23 von unterschiedlichen Baueinheiten bereitgestellt sein, alternativ aber auch von einer gemeinsamen Baueinheit.

Bei Ausführungsbeispielen der Erfindung kann vorgesehen sein, dass stromabwärts des Auslasses 19, wie in Figur 16 angedeutet, eine Einrichtung 73 zur Messung der Leitfähigkeit vorgesehen ist. Diese kann alternativ, oder zusätzlich zur ebenfalls dargestellten Einrichtung 21 zur Durchflussmessung vorgesehen sein, und ebenfalls über eine angedeutete Signal- und /oder Steuerleitung mit der Recheneinheit 22 in Verbindung stehen.

Unter Zuhilfenahme der Einrichtung 73 zur Leitfähigkeitsmessung kann die Leitfähigkeit des Mediums exakt bestimmt werden.

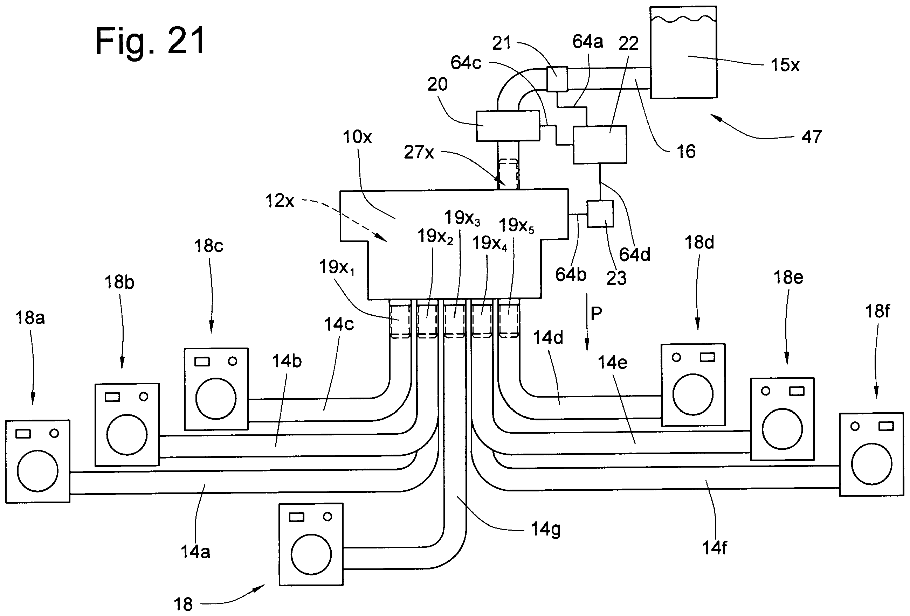

Bei einer später noch im Zusammenhang mit der Figur 21 beschriebenen Ausführungsform der Erfindung kann eine dort nicht dargestellte Einrichtung zur Leitfähigkeitsmessung auch stromabwärts des Einlasses 27x angeordnet sein.

Bei dem Ausführungsbeispiel gemäß Figur 16 ist die Anordnung der Einrichtung 73 zur Leitfähigkeitsmessung beispielsweise von Vorteil, wenn als unterschiedliche Medien Lösungen mit unterschiedlichen Salzkonzentrationen, oder unterschiedliche Salzlösungen, vorgesehen sind. Über die Messung der Leitfähigkeit kann beispielsweise eine besondere Sicherheit gewährleistet werden, oder mit hoher Exaktheit festgestellt, und gegebenenfalls auch protokolliert werden, welche Salzlösung eingesetzt wurde, bzw. zu welchem Zeitpunkt.

Die Vorrichtung 10 umfasst vorteilhaft, wie in Figur 11 angedeutet, ein Gehäuse 24. In dem Gehäuse sind das Stellglied 12 und die Eingangsscheibe 11 untergebracht.

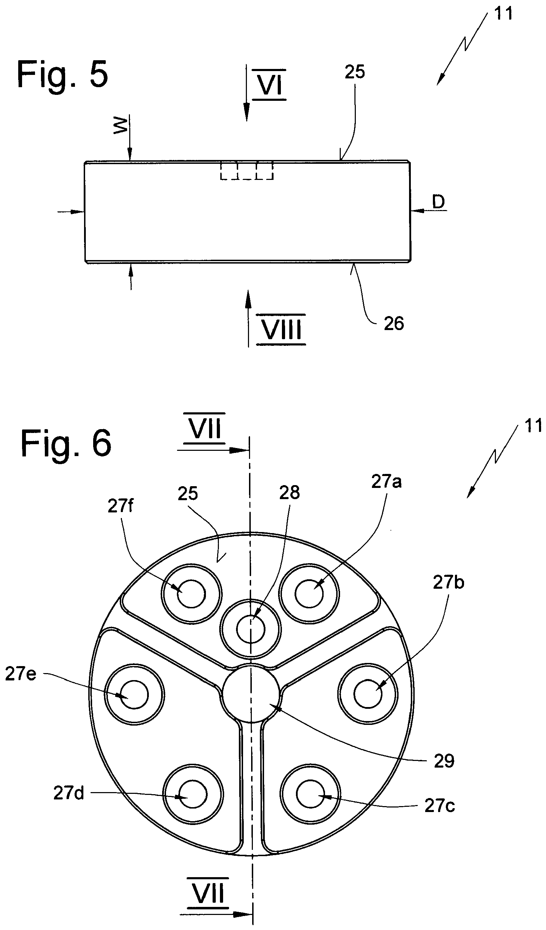

Die Eingangsscheibe 11 wird nun anhand der Figuren 5 bis 10 beschrieben:

Die Eingangsscheibe 11 ist im Wesentlichen scheibenförmig, d. h. sie ist ein in Ansicht im wesentlichen kreisförmiges Element, dessen Außendurchmesser D größer ist als die Wanddicke W. Die Eingangsscheibe 11 umfasst eine Eingangsseite 25 und eine Ausgangsseite 26.

Auf der Eingangsseite 25 befinden sich sechs Einlässe 27a, 27b, 27c, 27d, 27e, 27f. Die Zahl der Einlässe entspricht der Zahl der maximal an die Vorrichtung 10 anschließbaren Materialbehältnisse 13a, 13b, 13c, 13d, 13e, 13f. Die bei den beschriebenen Ausführungsbeispielen vorgestellte Zahl von sechs Einlässen ist lediglich beispielhaft zu verstehen und beliebig.

Auf der Eingangsseite 25 der Eingangsscheibe 11 ist des Weiteren ein Einlass 28 für ein Spülmittel vorgesehen. Zentral ist die Scheibe 11 mit einer Durchgangsbohrung 29 versehen.

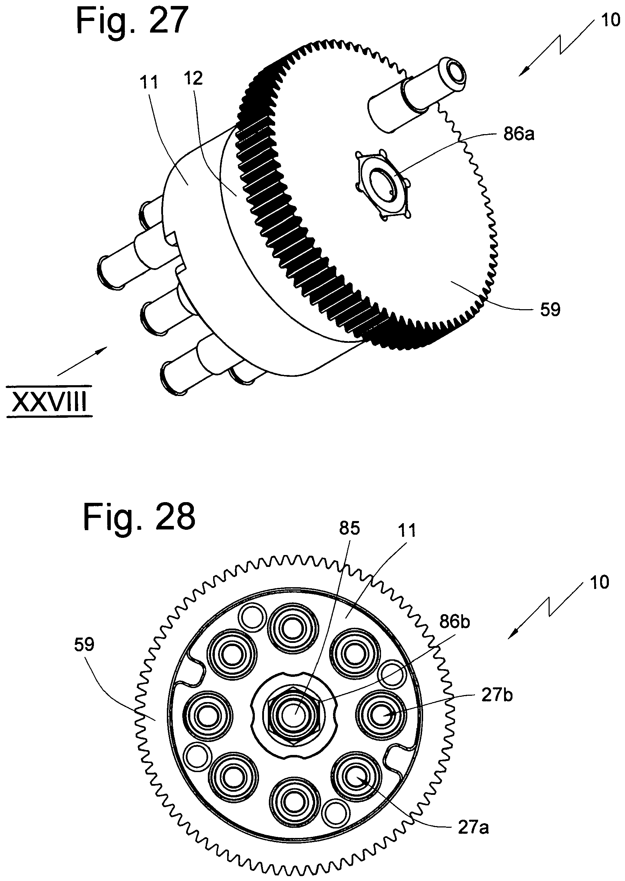

Die Durchgangsbohrung 29 kann, sowie gleichermaßen auch die Durchgangsbohrung 29 der später zu beschreibenden Stellglied-Scheibe 12 von einem Zentrierelement oder einer Welle oder gegebenenfalls einer Antriebswelle durchsetzt, insbesondere auch gemeinsam durchsetzt werden. Dies wird später noch anhand der Figuren 27 und 28 erläutert werden.

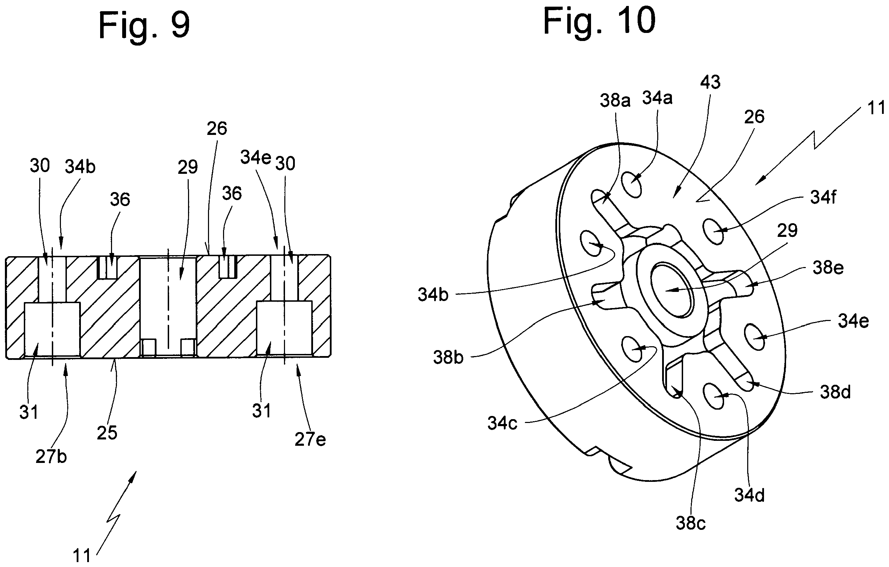

Wie beispielsweise die Schnittdarstellung der Figur 9 deutlicht macht, ist jeder Einlass 27a, 27b, 27c, 27d, 27e, 27f als Sackbohrung ausgebildet und umfasst einen schmaleren Durchlassbereich 30 und einen demgegenüber etwas breiteren Halsbereich 31. In den Halsbereich 31 kann jeweils ein Stutzen 32 eingesteckt werden (vgl. Fig. 11), dessen außen liegendes Ende 33 beispielsweise mit einem Schlauch verbunden werden kann. Hierdurch wird eine besonders einfache Verbindungsmöglichkeit bereitgestellt.

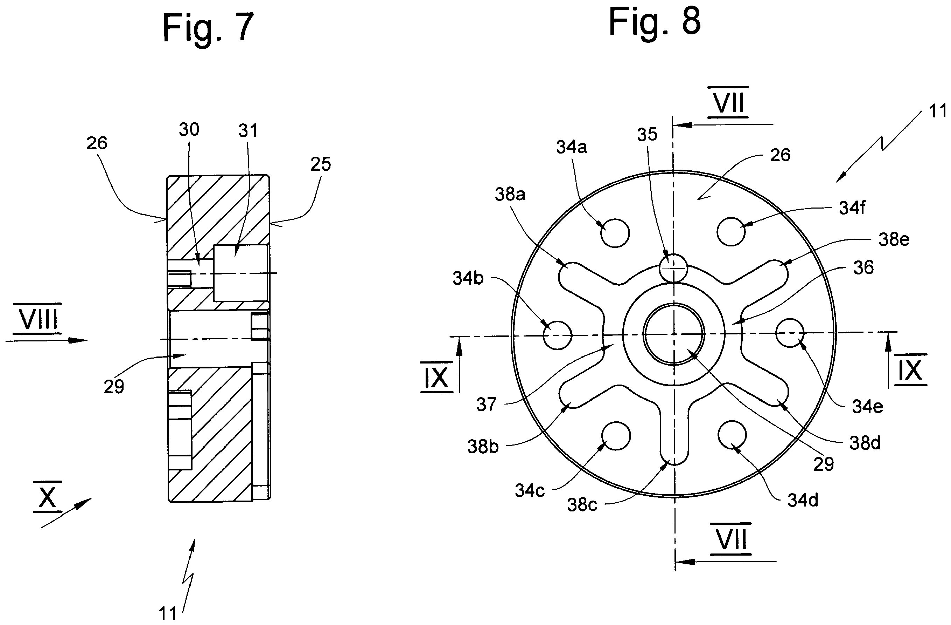

Die Eingangsscheibe 11 weist auf ihrer Ausgangsseite 26 eine der Zahl der Einlässe 27a, 27b, 27c, 27d, 27e, 27f entsprechende Zahl von Einlassöffnungen 34a, 34b, 34c, 34d, 34e, 34f auf. Des Weiteren ist eine Öffnung 35 (Figur 8) vorgesehen, die mit dem Spülmitteleinlass 28 kommuniziert. Die Öffnung 35 mündet in eine Nut-Anordnung 36 (vgl. Fig. 8 und Fig. 10), die einen im Wesentlichen ringförmigen inneren Bereich 37 und sternförmig angeordnete Nut-Taschen-Enden 38a, 38b, 38c, 38d 38e aufweist. Die Anordnung ist derart getroffen, das jeweils zwischen zwei Einlassöffnungen 34a, 34b die mit Einlässen 27a, 27b kommunizieren, eine Nut-Tasche 38a als Spülmitteleinlassöffnung angeordnet ist.

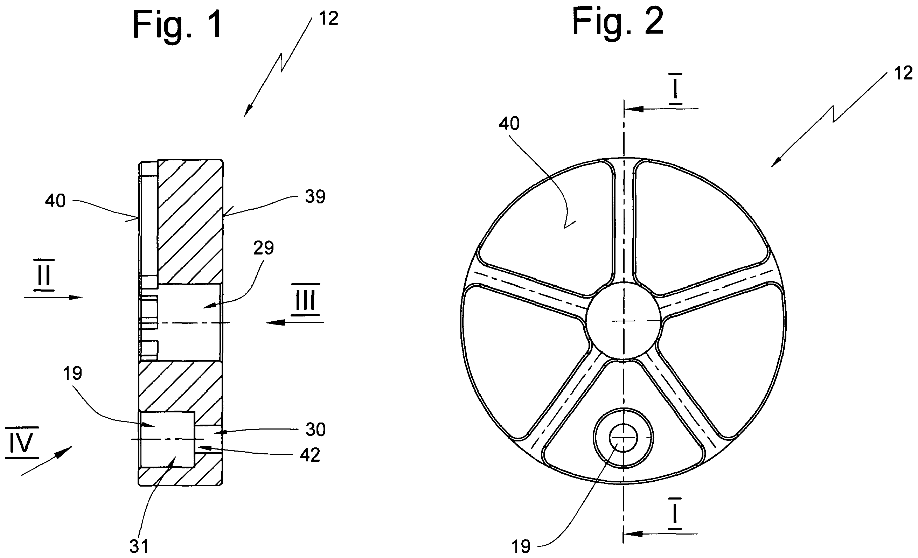

Das Stellglied 12 wird nun anhand der Figuren 1 - 4 beschrieben:

Das Stellglied ist ein im Wesentlichen scheibenförmiger Körper mit einer Eingangsseite 39 und einer Ausgangsseite 40. Auf der Ausgangsseite 40 des Stellgliedes 12 ist der Auslass 19 angeordnet, der gleichermaßen, wie die Einlässe 27a, 27b, 27c, 27d, 27e, 27f, 28, über eine verbreiterten Halsbereich 31 und einen schmaleren Durchlassbereich 30 verfügt, insbesondere um einen Schlauch unter Zuhilfenahme eines Stutzens anzubringen. Der eigentliche Durchgangskanal 42 wird von dem schmalen Bereich 30 des Auslasses 19 bereitgestellt.

Die Eingangsseite 39 des Stellgliedes 12 ist bis auf die zentrale Durchgangsbohrung 29 und den Mündungsbereich 41 des Durchgangskanales 42 vollkommen glatt ausgebildet.

In zusammengebauter Anordnung sind die Eingangsscheibe 11 und das Stellglied 12 in konzentrischer Anordnung zueinander angebracht, derart, dass sie entlang einer gemeinsamen Mittelachse M orientiert sind. Die Mittelachse M stellt zugleich die geometrische Drehachse dar, um die das Stellglied 12 relativ zu der festgehaltenen Eingangsscheibe 11 rotierbar ist.

Die Eingangsscheibe 11 ist mit ihrer Ausgangsseite 26 der Eingangsseite 39 des Stellgliedes 12 zugewandt, wobei zwischen den beiden Elementen 11, 12 aufgrund der verwendeten Materialien und der aufgewendeten Andruckkräfte Dichtigkeit gegenüber dem Außenraum erreicht wird. Je nach Drehposition des Stellgliedes 12 kann der Durchgangskanal 42 mit seinem Mündungsbereich 41 entweder mit einem Sperrbereich 43 der Eingangsscheibe 11 in Kontakt gebracht werden, oder mit einer Einlassöffnung 34a, 34b, 34c, 34d, 34e, 34f oder mit einem Bereich 38 der Nut 36.

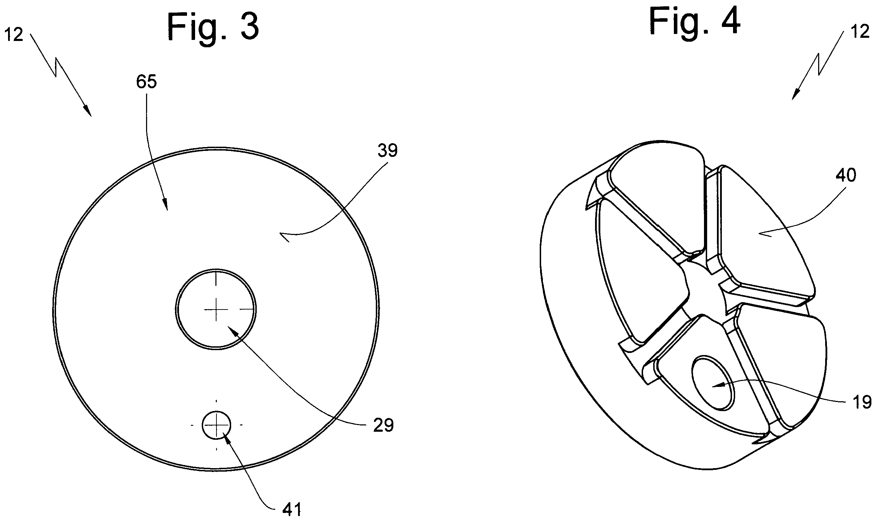

Liegt der Mündungsbereich 41 des Durchgangskanals 42 einem Sperrbereich 43 gegenüber, ist der Auslass 19 gegenüber jeglicher der Einlassöffnungen 28, 27a, 27b, 27c, 27d, 27e, 27f usw. abgedichtet, d. h. die Vorrichtung sperrt jeglichen Fluidfluss von den Vorratsbehältnissen 13a, 13b, 13c, 13d, 13e, 13f hin zur Zielvorrichtung 18 und verschließt die Behältnisse 13a, 13b, 13c, 13d, 13e, 13f zugleich gegenüber dem Außenraum. Zugleich sorgt der glatt gehaltene Bereich 65 (Fig. 3) der Eingangsseite 39 des Stellgliedes 12 durch ein entsprechendes Zusammenwirken mit den Einlassöffnungen 34a, 34b, 34c, 34d, 34e, 34f sowie mit der Nut 36 für eine vollständige Abdichtung sämtlicher Einlassöffnungen gegenüber dem Außenraum.

Nur dann, wenn der Durchgangskanal 42 infolge einer Rotation des Stellgliedes 12 in eine Position verfahren wird, in der sein Mündungsbereich 41 einer Einlassöffnung 34 gegenüberliegt und mit dem zugehörigen Einlass 27 in kommunikativer Verbindung steht, kann ein Fluidfluss durch Erzeugung eines Unterdruckes durch die Pumpe 20 im Durchgangskanal 42 durch den Durchgangskanal 42 hindurch bewerkstelligt werden.

Wenn der Durchgangskanal 42 aus einer ersten Position, in der er beispielsweise der Öffnung 34a gegenüberliegt, in eine andere Position verlagert werden soll, in der er, z. B. der Öffnung 34b gegenüberliegt, überfährt er zwangsläufig die Nut-Tasche 38a, die eine Spülmitteleinlassöffnung darstellt. Verharrt der Durchgangskanal 42 eine vorher bestimmte Zeit in einer Position, in der er der Nut-Tasche 38a gegenüberliegt, kann die Pumpe ein vorher bestimmtes Volumen an Spülmittel durch den Durchgangskanal 42 hindurchfördern und den Durchgangskanal 42 auf diese Weise rückstandsfrei reinigen.

Dabei spielt eine besondere Rolle, dass der Durchgangskanal 42 selbst geradlinig ausgebildet ist und an seinen Seitenwänden keinerlei Unebenheiten aufweist. Hierdurch können besonders vorteilhafte Strömungsverhältnisse erzielt werden, die einerseits eine präzise Vorherbestimmung des für eine Reinigung erforderlichen Fluidflusses durch den Durchgangskanal 42 zulassen, sowie andererseits eine besonders vorteilhafte, vollständige Spülung des Durchgangskanals 42 ermöglichen.

Figur 12 lässt erkennen, dass das Stellglied 12 von einer Verzahnung 44 umgeben ist. Die Verzahnung 44 kann Bestandteil eines metallischen oder insbesondere aus Kunststoff bestehenden Ringkörpers 59 sein, der an dem Stellglied 12 befestigt ist.

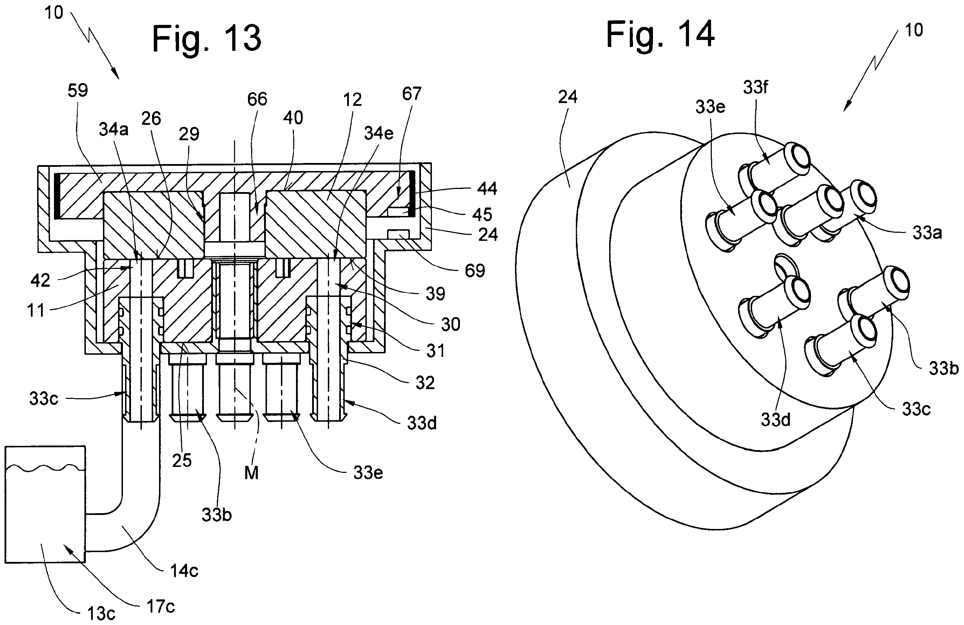

Die Schnittdarstellungen der Figur 11, 18 und 13 lassen erkennen, dass der Ringkörper 59 auf die Ausgangsseite 40 des Stellgliedes 12 aufgesetzt sein kann und das Stellglied 12 innenseitig und außenseitig teilweise übergreifen kann. Hierzu kann der Ringkörper 59 mit einem zentralen Fortsatz 66 ausgestattet sein, der in die entsprechende Durchgangsbohrung 29 des Stellgliedes 12 eingreift. Zugleich können Werkstoffbereiche 67 des Ringkörpers 59 (Fig. 13) derartig ausgebildet sein, dass das Stellglied 12 auf seine Außenmantelfläche geringfügig übergriffen wird. Der gesamte Ringkörper 59 kann aus Metall gebildet sein. Er weist in fluchtender Anordnung zu dem Durchgangskanal 42, wie dies Figur 11 zeigt, ebenfalls eine Durchgangsbohrung 68 auf.

Selbstverständlich bestehen für den Fachmann noch alternative Möglichkeiten, an dem Stellglied 12 eine Verzahnung 44 anzubringen. Beispielsweise kann eine solche Verzahnung auch unmittelbar in das Material des Stellgliedes 12 eingearbeitet sein.

Das Stellglied 12, wie auch die Eingangsscheibe 11, bestehen vorzugsweise aus keramischem Material. Die einander gegenüberliegenden Flächen 39, 26 können vorteilhafter Weise geläppt sein.

Das die Verzahnung 44 bereitstellende Zahnrad ist drehfest mit dem Stellglied 12 verbunden.

Figur 18 lässt erkennen, dass neben der Eingangsscheibe 11, dem Stellglied 12, und dem Zahnrad-Ringkörper 59, innerhalb des Gehäuses 24 auch noch ein Antrieb 62, z. B. ein Elektromotor, angeordnet ist. Der Antrieb 62 kann über eine Spindelanordnung 61 mit einem Antrieb-Zahnrad 60 zusammenwirken. Die Zähne dieses Zahnrades 60 kämmen mit der Verzahnung 44 des Ringkörpers 59 und können insoweit das Stellglied 12 in Rotation versetzen und den Durchgangskanal 42 verlagern.

Um den Antrieb 62 anzusteuern, ist eine Steuerung 63 vorgesehen, die über eine Signal- und/oder Steuerleitung 64f mit dem Antrieb verbunden ist. Die Steuerung 63 bei dem Ausführungsbeispiel der Figur 18 kann zusätzlich zu einer Steuerung 23 gemäß Ausführungsbeispiel der Figur 16 vorgesehen sein. Die beiden Steuerungen 23, 63 können aber auch von einem gemeinsamen Bauelement bereitgestellt sein.

In den Figuren 11, 12 und 18 ist ein Positions-Markierungselement 45 angedeutet, welches nur an einer bestimmten Umfangsstelle des Stellgliedes 12 angeordnet oder einer solchen Stelle zugeordnet ist. Die Drehposition des Stellgliedes 12 kann unter Zuhilfenahme des Positions-Markierungselementes 45, dessen Position erfasst wird, erfasst werden. Hierfür ist eine Positionserfassungseinheit 69 vorgesehen, die beispielsweise im Bereich des Gehäuses 24 der Vorrichtung 10 angeordnet sein kann. Die Positionserfassungseinheit 69 kann von einem Sensor oder Detektor bereitgestellt sein, der das Vorhandensein des Markierungselementes 45 beispielsweise in seiner unmittelbaren Nachbarschaft erfassen kann. Es kann sich beispielsweise um einen Näherungssensor oder - je nach Ausgestaltung und Ausbildung des Markierungselementes 45, um einen optischen, elektrischen, induktiven, kapazitiven, magnetischen, akustischen oder sonst wie geeignet ausgebildeten Sensor handeln.

Die Positionserfassungseinheit 69 ist über eine Signal und/oder Steuerleitung 64g mit der Steuerung 63 verbunden und kann der Steuerung 63 auf diese Weise mitteilen, in welcher Position sich das Stellglied 12 oder die Markierung 45 befindet.

Das Markierungselement 45 kann an dem Ringkörper 59 angeordnet sein, wie dies in Figur 18 angedeutet ist. Alternativ kann das Markierungselement 45 auch unmittelbar in dem Stellglied 12 angeordnet sein.

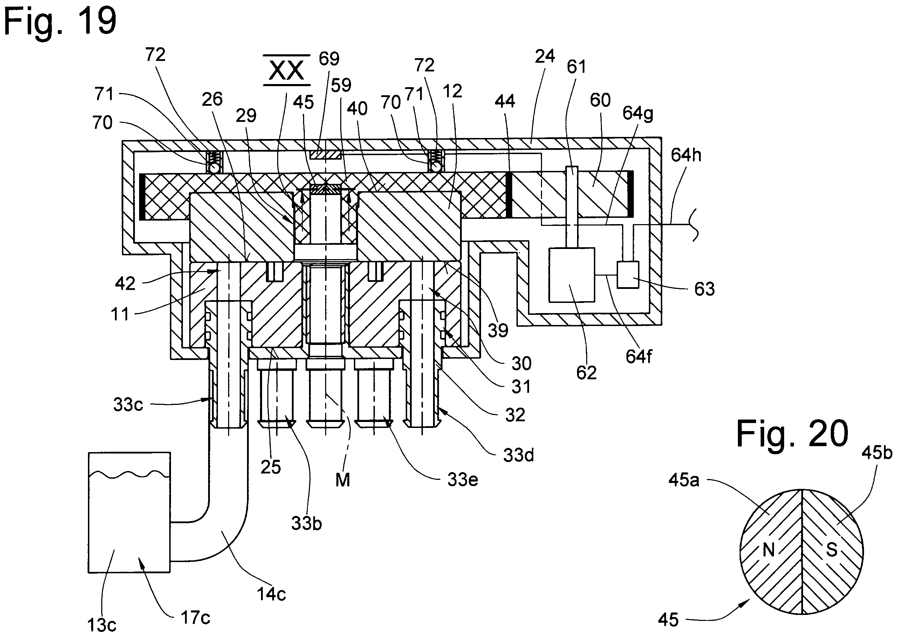

Bei einem alternativen Ausführungsbeispiel der Erfindung, welches in den Figuren 19 und 20 dargestellt ist, ist das Element 45 zur Positionsmarkierung von einem magnetischen, insbesondere kreisscheibförmigen, Element gebildet. Dieses ist in Figur 20 in vergrößerter Einzel-Ansicht dargestellt.

Man erkennt zwei unterschiedlich magnetisierte Bereiche 45a und 45b, so dass das Element 45 insgesamt als Dipol-Magnet ausgebildet ist.

Die Kreisscheibe 45 ist bei dem Ausführungsbeispiel der Figur 19 konzentrisch zur Mittelachse M der Vorrichtung angeordnet.

Ebenfalls in Flucht zur Mittelachse M ist die Einrichtung 69 zur Positionserfassung angeordnet. Diese ist über eine entsprechende Signal- und/oder Steuerleitung 64g mit der Steuerung 63 verbunden. Die Einrichtung 69 zur Positionserfassung ist bei diesem Ausführungsbeispiel als Magnetfeldsensor ausgebildet und an dem Gehäuse 24 fest angeordnet.

Vorzugsweise erfasst die Steuerung 63 die Position des Markierungselementes 45 permanent.

Die in den Zeichnungen dargestellten Ausführungsbeispiele sehen vor, dass das Stellglied 12 relativ zur festgehaltenen Eingangsscheibe 11 verlagerbar ist.

Bei nicht dargestellten Ausführungsformen der Erfindung kann auch das Stellglied 12 festgehalten und die Eingangsscheibe 11 relativ zu dem Stellglied 12 verlagert werden.

Die beiden Schnittdarstellungen der Figur 11 und der Figur 13 zeigen die gleiche Drehposition des Stellgliedes 12 relativ zu einer Scheibe 11. Gemäß Figur 11 befindet sich der Durchgangskanal 42 in fluchtender Anordnung zu einer Nut-Tasche 38 der Spülmittel-Nut 36, d. h. in Spülposition. In dieser Position des Stellgliedes 12 kann die Pumpe 20 Spülmittel durch den Durchgangskanal 42 hindurchfördern.

In der Drehposition gemäß Figur 13 (dies ist die gleiche Drehposition wie bei Figur 12) kann man deutlich erkennen, dass die Eingangsseite 39 des Stellgliedes 12 die entsprechenden gegenüberliegenden Einlassöffnungen 34a, 34b, 34c, 34d, 34e, 34f dichtend verschließt.

Figur 14 macht deutlich, dass in den jeweiligen Einlass 27a, 27b, 27c, 27d, 27e, 27f ein Stutzen 33a, 33b, 33c, 33d, 33e, 33f eingesetzt werden kann. Hierdurch können insbesondere Schläuche auf einfache Weise angeschlossen werden.

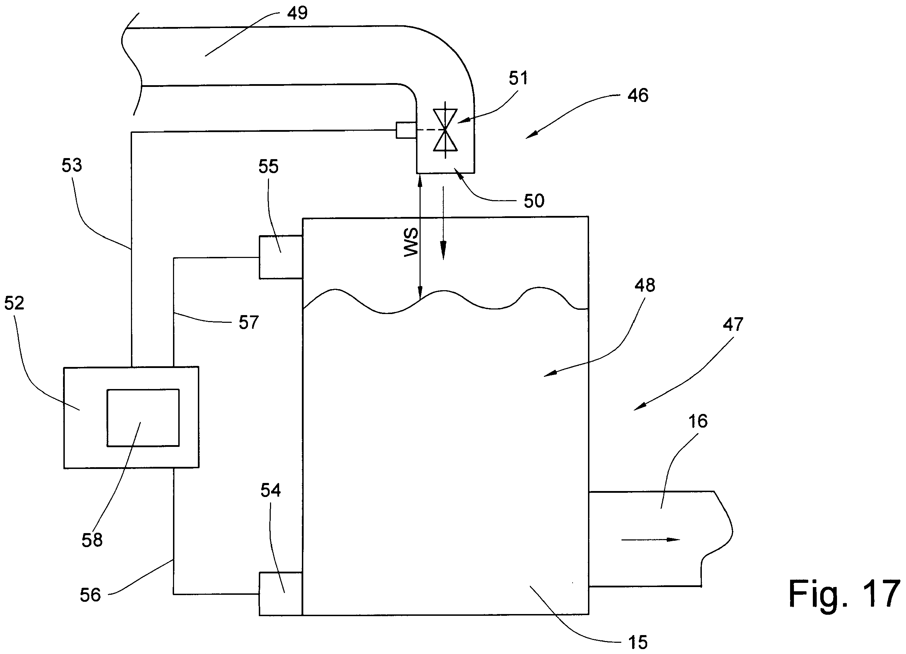

Anhand des Ausführungsbeispiels der Figur 17 wird nun noch eine Rohr-Trenneinrichtung, ein sogenannter Rohrtrenner 46, beschrieben. Der Rohrtrenner 46 ist, bezogen auf das Ausführungsbeispiel der Figur 16, einer Spüleinrichtung 47 zugeordnet und stromaufwärts des Spülmitteleinlasses 28 angeordnet.

Die Rohrtrenneinrichtung 46 und die Spüleinrichtung 47 umfassen ein Behältnis 15 für Spülmittel 48. Das Spülmittel 48 ist im vorliegenden Fall Wasser.

Um zu verhindern, dass chemische Verunreinigungen oder Keime in das Leitungswassernetz 49 gelangen können, ist im Bereich eines Auslasses 50 des Leitungswassernetzes ein Ventil 51 vorgesehen, welches automatisch öffenbar und schließbar ist. Eine Steuerung 52 ist über eine Steuerleitung 53 mit dem Ventil 51 verbunden.

Dem Spülmittelbehältnis 15 ist ein unterer Niveaustandsensor 54 und ein oberer Niveaustandsensor 55 zugeordnet. Beide Sensoren 54, 55 sind über Leitungen 56, 57 ebenfalls mit der Steuerung 52 verbunden.

Sobald die Niveausensorik 54 feststellt, dass ein gewisser Pegel unterschritten ist, weil sich infolge einer Entnahme von Spülmittel 48 aus dem Behältnis 15 das verbleibende Spülmittel-Volumen verringert hat, wird über die Steuerleitung 56 ein Signal an die Steuerung 52 weitergeleitet. Ein beispielweise der Steuerung 52 zugeordneter Prozessor 58 sendet dann über die Steuerleitung 53 ein Signal an das Ventil 51, eine Ventilöffnung einzuleiten. Sodann kann Wasser aus dem Leitungswassernetz 49 in das Behältnis 15 gelangen, wobei es eine Wegstrecke WS in freiem Fall zurücklegt. Das Behältnis 15 füllt sich so lange, bis ein oberes Niveau erreicht ist, welches von dem oberen Niveausensor 55 detektiert wird. Bei der Detektion des Erreichens des oberen Niveaus, kann über die Steuerleitung 57 die Steuerung 52 unterrichtet werden, die daraufhin über die Steuerleitung 53 das Ventil 51 anspricht, um einen Schließvorgang einzuleiten. Nach Beendigung des Schließvorganges ist das Leitungswassernetz 49 wieder hermetisch abgeschlossen.

Der Vorteil einer solchen Rohrtrenn-Einrichtung 46 liegt darin, dass das Leitungswassernetz 49 vor Rückflüssen, vor Verunreinigung durch Keime oder Chemikalien geschützt ist. Das Wasser kann im freien Fall eine vorher definierte Fallstrecke durchlaufen. Rückflüsse sind daher ausgeschlossen.

Dies ermöglicht insbesondere in vorteilhafter Weise bei einfacher Bauweise einen Anschluss der erfindungsgemäßen Vorrichtung 10 unter Zuhilfenahme einer Rohrtrenn-Einrichtung 46 an das Leitungswassernetz 49.

Die geometrische Ausbildung der Behältnisse 13 für die Medien 17 und des Behältnisses 15 für das Spülmittel 48 und der entsprechende Anschluss der Leitungen 14 und 16 sind lediglich schematisch angedeutet und beschrieben. Vorzugsweise sind die entsprechenden Anschlussleitungen über sogenannte Sauglanzen mit den Behältnissen 13 verbunden, um die entsprechenden Medien 17, bzw. das Spülmittel, zu entnehmen und eine Restentleerung zu ermöglichen.

Die Ausführungsbeispiele der erfindungsgemäßen Vorrichtung wurden anhand einer Anordnung beschrieben, die zwei relativ zueinander verlagerbare Elemente, nämlich eine relativ zu dem Gehäuse festgehaltene Eingangsscheibe 11 und ein dazu relativ verlagerbares Stellglied 12 umfassen. Bei anderen Ausführungsbeispielen, die in den Figuren nicht dargestellt sind, könne auch drei oder mehr Elemente, insbesondere scheibenförmige Elemente, in einer Stapelanordnung vorgesehen sein.

Anstelle einer rotatorischen Verlagerung eines Stellgliedes kommt auch eine lineare Verlagerung des Stellgliedes 12 in Betracht.

Das Ausführungsbeispiel wurde beschrieben anhand zweier Scheiben, die aus einem keramischen Material bestehen. Auch andere Materialien, beispielsweise Kunststoff, Metall, oder mit besonderen Oberflächen ausgestattete oder auf besondere Weise behandelte Werkstoffe und Materialien können eingeschrieben werden.

Die in den Zeichnungen dargestellten Ausführungsformen der Erfindung stellen jeweils eine einzelne Vorrichtung dar, bei der mehrere Einlassöffnungen mit einem Auslass, wahlweise schaltbar, in kommunikative Verbindung gebracht werden können. Es ist von der Erfindung auch umfasst, das mehrere derartige Vorrichtungen 10 seriell oder parallel zueinander geschaltet werden, um - je nach Anwendungszweck und Bedarf - die Zahl der zu mischenden oder zuzuführenden Fluide zu erhöhen.

Soweit die erfindungsgemäße Vorrichtung eine Durchflussmess-Einrichtung verwendet, die vorzugsweise stromabwärts des Auslasses vorgesehen ist, ist es besonders vorteilhaft, wenn lediglich eine einzige Durchflussmess-Einrichtung vorgesehen wird.

Vorzugsweise wird die beschriebene Vorrichtung in Kombination mit einer als Waschmaschine 18 ausgebildeten Zielvorrichtung eingesetzt. Die Zielvorrichtung kann aber auch eine medizinische Vorrichtung sein, bei der unterschiedliche Chemikalien zur Mischung eines Medikamentes zusammengesetzt werden, oder auf andere Weise zur Behandlung von Krankheiten eingesetzt werden. Zielvorrichtungen können alternativ aber auch in anderen Gebieten der Reinigungstechnologie, der Prozesstechnik, der Medizin, der Landwirtschaft, der Chemie, der Lebensmitteltechnik, auf geeignete Weise ausgebildet sein und z. B. ein geeignetes Sammelbehältnis oder Mischbehältnis aufweisen.

Die erfindungsgemäße Vorrichtung kann auch im Rahmen der Analyse von Blut- oder Urinproben eingesetzt werden. Beispielsweise kann die Zielvorrichtung ein Gefäß umfassen, welches Bestandteil einer Analysevorrichtung ist. In dem Gefäß können beispielsweise Reaktionen des zu untersuchenden Stoffes mit den eingebrachten unterschiedlichen Medien, z. B. unterschiedlichen Salzlösungen oder Salzlösungen mit unterschiedlichen Konzentrationen, stattfinden.

Hierfür ist beispielsweise auch der Einsatz einer Vorrichtung besonders vorteilhaft, wenn beispielsweise unterschiedliche Materialbehältnisse 13 mit unterschiedlichen Salzlösungen bestückt sind, und die Zielvorrichtung das Probegefäß umfasst.

Das in der Anmeldung beschriebene Verfahren ermöglicht es, nach einem Schritt der Einbringung eines Fluides in den Durchgangskanal infolge einer Verlagerung des Durchgangskanals diesen mit einem Spülmittel zu spülen. Vorzugsweise wird jedes Mal, nachdem ein erstes Material aus dem ersten Einlass heraus in den Durchgangskanal eingetragen worden ist, nach Verlagerung des Stellgliedes 12 ein Spülmittel 48 in den Durchgangskanal 42 eingetragen.

Als Spülmittel kann Wasser eingesetzt werden, was insbesondere eine vorteilhafte Verbindung mit dem Leitungswassernetz 24 ermöglicht. Es kann bei anderen Ausführungsbeispielen aber auch vorgesehen sein, andere Medien als Wasser als Spülmittel einzusetzen.

Bei einer Ausgestaltung der Erfindung sind stromaufwärts der Einlässe 27 Rückschlagventile vorgesehen. Diese verhindern, dass ungewünscht Spülmittel 48 oder andere Fluide 17 als vorgesehen in die entsprechenden Behältnisse 13 geraten oder in die entsprechenden Zuführleitungen 14, 16 geraten.

Vorteilhaft ist eine Gehäuseanordnung 24 vorgesehen, die die beiden Keramikteile, insbesondere die Eingangsscheibe 11 und das Stellglied 12, wannenförmig umgreift. Dabei ist die geometrische Anordnung vorzugsweise derart betroffen, dass die Drehachse M vertikal ausgerichtet ist und das Stellglied 12 oberhalb der Eingangsscheibe 11 angeordnet ist.

Weiter vorteilhaft werden die Eingangsscheibe 11 und das Stellglied 12 relativ zueinander in Axialrichtung unter Federkraft beaufschlagt. Hierfür können Kugeldruckfederelemente vorgesehen sein. Figur 18 deutet in diesem Zusammenhang an, dass an der oberen Wand des Gehäuses 24 Hülsen 70 angeordnet sein können, in denen Kugeln 71 geführt sind, die von Federn 72 im Ausfahrsinne beaufschlagt sind. Auch die Federn 72 sind innerhalb der jeweiligen Hülse 70 angeordnet.

Aufgrund der Federkraft üben die Kugeln 71 eine Kraft auf den Ringkörper 59 und somit auch zugleich auf das Stellglied 12 aus, die dazu dient, die Eingangsseite 39 des Stellgliedes 12 auf die Ausgangsseite 26 der Eingangsscheibe 11 hin zu beaufschlagen. Hierdurch kann die gewünschte Dichtigkeit zwischen den beiden aneinander liegenden Flächen 26, 39, gewährleistet werden.

Die Position des Durchgangskanals 42 oder des Stellgliedes 12 kann von der Einheit 69 bzw. der Steuerung 63 permanent erfasst werden, oder nur zu bestimmten Zeitpunkten, beispielsweise vor oder nach jeder Ansteuerung durch den Antrieb 62.

Das Stellglied 12 kann eine nicht dargestellte Überdreh-Sicherung aufweisen. Dies bedeutet, dass das Stellglied 12 immer nur entlang eines maximalen Winkelbereichs, von z. B. 355°, gedreht werden kann und anschließend eine Anschlagsicherung verhindert, dass über den vorgegebenen Maximalwinkel hinaus eine Drehung erfolgt. Damit kann beispielsweise gewährleistet werden, dass sich Leitungen oder Schläuche nicht über ein vorgegebenes Maß hinaus verdrillen.

Um den Durchgangskanal 42 mit einer bestimmten Einlassöffnung in kommunikative Verbindung zu bringen, muss gegebenenfalls eine komplette Rückdrehung des Stellgliedes 12 erfolgen.

Die Vorrichtung kann beispielsweise auch als Nachrüstvorrichtung ausgestattet sein, um an bestehende Waschmaschinen angeschlossen zu werden. Sie kann vorteilhaft über eine Schnittstelle, beispielsweise über eine Steuerung, z. B. über ein Relais, an einen Programmwahlschalter einer Gewerbewaschmaschine angeschlossen werden. Hierzu kann beispielsweise auch eine Adaptierung und Transformation der von einem Relais einer herkömmlichen Gewerbewaschmaschine oder Waschmaschine erhaltenen Steuersignale in neue Ansteuerungssignale vorgesehen sein.

Das Ausführungsbeispiel der Figur 21 zeigt eine Vorrichtung, bei der die mehreren Einlässe zu mehreren Auslässen, und der einzige Auslass zu dem einzigen Einlass umfunktioniert worden sind. Hier ist also eine geometrisch invertierte Anordnung getroffen, bei der der Ausgang stromaufwärts der Einlässe, bezogen auf die Strömungsrichtung P, angeordnet ist.

Bei der auf diese Weise eingesetzten erfindungsgemäßen Vorrichtung ist der einzige Einlass 27x mit einem Spülmittelbehältnis 15 oder Materialbehältnis verbunden.

Die zahlreichen Auslässe 19x1, 19x2, 19x3, 19x4, 19x5, sind über entsprechende Leitungen 14a, 14b, 14c, 14d, 14e, 14f mit mehreren Zielvorrichtungen 18a, 18b, 18c, 18d, 18e, 18f verbunden.

Die Ansteuerung des bei dem Ausführungsbeispiel der Figur 21 nicht dargestellten Stellgliedes kann analog zu der bezüglich des Ausführungsbeispiels der Figur 16 erläuterten Weise erfolgen. Dies erfolgt lediglich mit dem Unterschied, dass anstelle einer Vielzahl von Materialbehältnissen 13 bzw. Spülmittelbehältnis 15 nunmehr lediglich ein einziges Ausgangsbehältnis 15 (Materialbehältnis oder Spülmittelbehältnis) verwendet wird, und anstelle einer einzigen Zielvorrichtung 18 beim Ausführungsbeispiel der Figur 16 nunmehr eine Vielzahl von Zielvorrichtungen 18a, 18b, 18c, 18d, 18e, 18f beim Ausführungsbeispiel der Figur 21 eingesetzt werden.

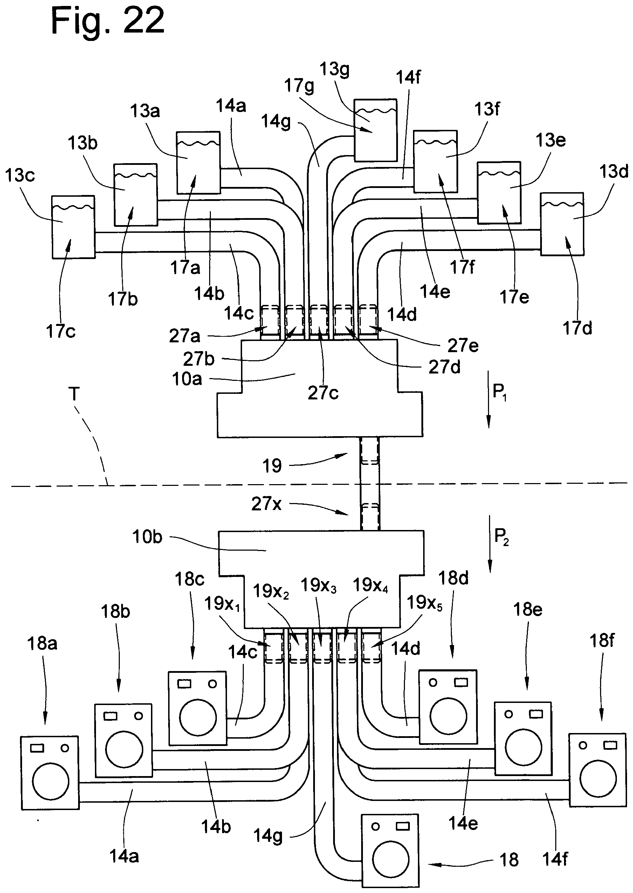

Die Figur 21 zeigt ein weiteres Ausführungsbeispiel einer Vorrichtung. Schließlich wird bezüglich des Ausführungsbeispiels der Figur 22 angemerkt, dass hier zwei Vorrichtungen 10a und 10b geometrisch umgekehrt aufeinander zugewandt seriell angeordnet sind.

Entlang der gestrichelten Trennebene T sind sozusagen das Ausführungsbeispiel der Figur 16 im oberen Teil der Figur 22 und das Ausführungsbeispiel der Figur 21 im unteren Teil der Figur 22 zusammengesetzt worden, derart, dass die Zielvorrichtung der Vorrichtung 10a nun die Vorrichtung 10b, oder anders ausgedrückt, das Ausgangsmaterialbehältnis 15 der Vorrichtung 10b nun von der Vorrichtung 10a bereitgestellt ist.

Dem Fachmann wird deutlich, dass eine derartige serielle, invertierte Anordnung zweier erfindungsgemäßer Vorrichtungen zu einer deutlichen Erhöhung der Anzahl möglicher schaltbarer, kommunikativer Verbindungswege führt. Hierdurch kann bei bestimmten Anwendungsfällen eine höhere Zahl von Varianten an Schaltungswegen erreicht werden.

Bezüglich der relativen räumlichen Anordnung der Vorrichtung 10 im Verhältnis zu den Materialbehältnissen 13, bzw. zu dem Spülmittelbehältnis 15 kann gemäß einer ersten Variante vorgesehen sein, dass sich die Vorrichtung 10, bezogen auf die durch die Gravitationskraft vorgegebene Orientierung, oberhalb der Materialvorratsbehältnisse 13, bzw. des Spülmittelbehältnisses befindet. Auf diese Weise kann, selbst wenn geringfügige Dichtigkeitsprobleme in der Vorrichtung bestehen, erreicht werden, dass die Medien grundsätzlich in die Materialbehältnisse zurück laufen. Bei einer alternativen Ausgestaltung der Erfindung können die Materialvorratsbehältnisse 13, bezogen auf die durch die Gravitationskraft vorgegebene Richtung oberhalb der Vorrichtung angeordnet sein, um z. B. zu verhindern, dass bei Dichtigkeitsprobleme in der Vorrichtung Medien in die Materialvorratsbehältnisse zurück laufen.

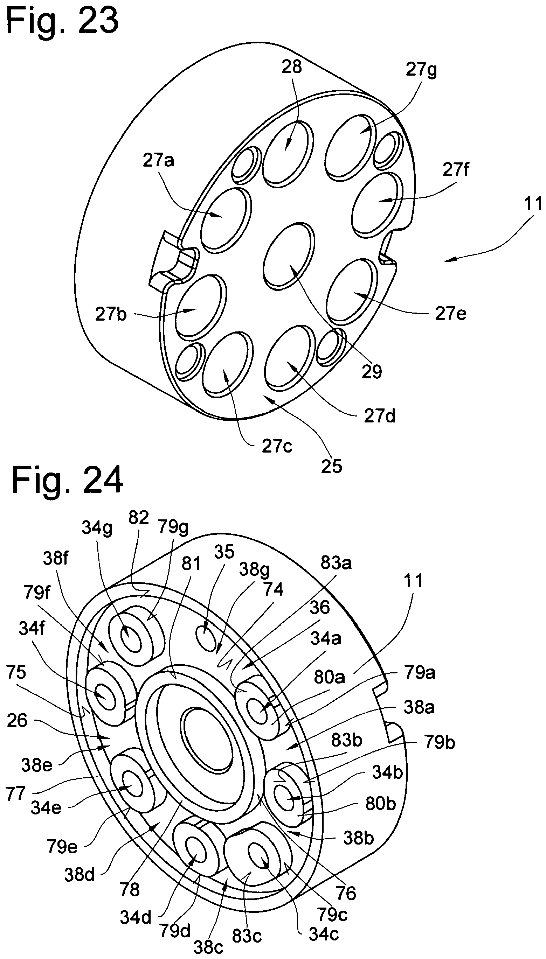

Anhand der Figuren 23 und 24 wird nun ein weiteres alternatives Ausführungsbeispiel einer Eingangsscheibe 11 zur Verwendung in einer erfindungsgemäßen Vorrichtung beschrieben.

Wie bereits bei der Eingangsscheibe 11 gemäß den Figuren 5 bis 10 ist die Eingangsseite der Eingangsscheibe 11 mit 25 und deren Ausgangsseite mit 26 bezeichnet. Auf der Eingangsseite 25 befinden sich ein Einlass 28 für ein Spülmittel, sowie sieben weitere Einlässe 27a, 27b, 27c, 27d, 27e, 27f, 27g für Materialien oder Medien. Die Eingangsscheibe 11 ist von einer zentralen Durchgangsbohrung 29 durchsetzt.

Auf ihrer Ausgangsseite 26 weist die Eingangsscheibe 11 eine der Zahl der Einlässe 27a, 27b, 27c, 27d, 27e, 27f, 27g entsprechende Zahl von Einlassöffnungen 34a, 34b, 34c, 34d, 34e, 34f, 34g auf. Des Weiteren ist eine Öffnung 35 vorgesehen (Fig. 24), die mit dem Spülmitteleinlass 28 kommuniziert. Die Öffnung 35 mündet in eine Nut-Anordnung 36. Die Nut-Anordnung 36 weist Nut-Taschen-Bereiche 38a, 38b, 38c, 38d, 38e, 38f, 38g auf, die sich jeweils zwischen zwei Einlassöffnungen (z. B. 34a, 34b) erstrecken. Die Nut 36 ist also auch bei diesem Ausführungsbeispiel so ausgebildet, dass sich jeweils zwischen zwei Einlassöffnungen (z. B. 34a, 34b) jeweils ein Taschenbereich 38a der Spülmittel-Nut 36 befindet.

Insgesamt ist die Nut 36 für das Spülmittel gemäß Fig. 24 derartig ausgebildet, dass sie jeweils eine Materialeinlassöffnung (z. B. 34a) vollständig umgibt. Dies führt zu einer besonders optimierten Spülbarkeit der maßgeblichen, miteinander in Kontakt kommenden Flächen, und für eine besonders sichere Trennung der unterschiedlichen Medien voneinander.

Die Spülmittel-Nut 36 wird bei dem Ausführungsbeispiel der Fig. 24 von einer Bodenfläche 74 begrenzt, sowie von einer Innenmantelfläche 75 und von einer Außenmantelfläche 76. Die Innenmantelfläche 75 ist Bestandteil eines äußeren Ringbundes 77 und die Außenmantelfläche 76 ist Bestandteil eines inneren Ringbundes 78.

Die Spülmittel-Nut 36 wird des Weiteren begrenzt von Außenmantelflächen 79a, 79b, 79c, 79d, 79e, 79f, 79g usw., die jeweils an einem Ringbund 80a, 80b, 80c, 80d, 80e, 80f, 80g angeordnet sind, wobei jeder Ringbund 80a, 80b, 80c, 80d, 80e, 80f, 80g eine Materialeinlassöffnung 34a, 34b, 34c, 34d, 34e, 34f, 34g umgibt.

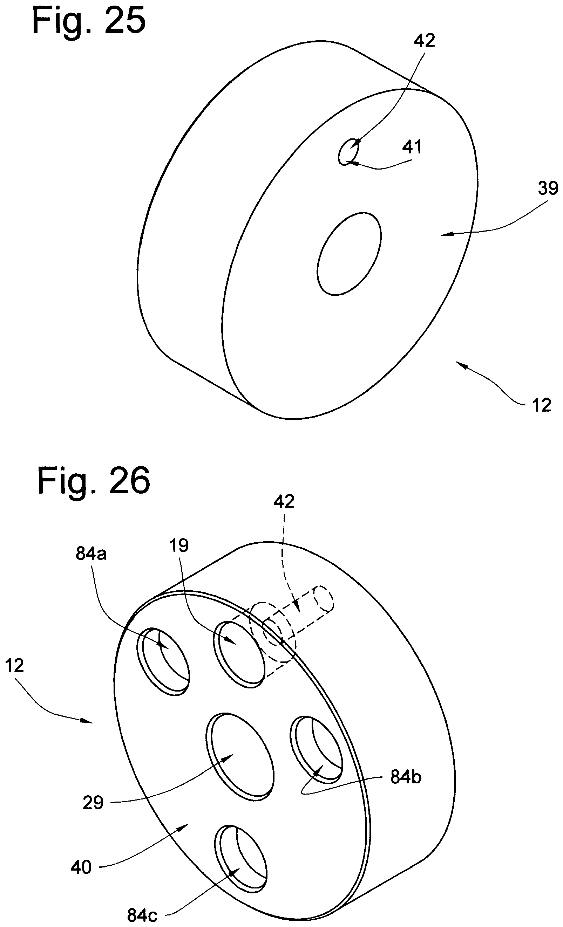

Im zusammengebautem Zustand fungiert die Eingangsseite 39 des Stellgliedes 12 der Figuren 25 und 26 als Dichtfläche gegenüber der Spülmittel-Nut 36 und gegenüber den Material-Einlassöffnungen 34a, 34b, 34c, 34d, 34e, 34f, 34g.

Diese Dichtfläche 39 kontaktiert im zusammengebauten Zustand der Vorrichtung 10 eine Ringstirnfläche 81 des inneren Ringbundes 78, eine Ringstirnfläche 82 des äußeren Ringbundes 77, und die einzelnen Ringstirnflächen 83a, 83b, 83c, 83d, 83e, 83f, 83g der einzelnen Ringbünde 80a, 80b, 80c, 80d, 80e, 80f, 80g, die sich um die Einlassöffnung 34a, 34b, 34c, 34d, 34e, 34f, 34g herum erstrecken.

Durch diese geometrische Ausbildung einer großflächig ausgebildeten Spülmittel-Nut 36 gelingt es, die Gesamtfläche der maßgeblichen, effektiven Dichtungsflächen gering zu halten. Hierdurch können optimale Kraftverhältnisse für die rotatorische Verlagerung des Stellgliedes, sowie eine optimierte Abdichtung, erreicht werden.

Bezüglich des in den Figuren 25 und 26 dargestellten Ausführungsbeispiels eines Stellgliedes 12, welches in Kooperation mit einer Eingangsscheibe 11 gemäß den Figuren 23 und 24 eingesetzt werden kann, sei angemerkt, dass dieses im Wesentlichen dem Stellglied der Figuren 1 bis 4 entspricht. Hier sind auf der Ausgangsseite 40 des Stellgliedes lediglich drei zusätzliche Sackbohrungen 84a, 84b, 84c dargestellt, die für eine bessere Positionierung und Zentrierung von Anbauteilen, bzw. insbesondere für einen Drehschluss des Stellgliedes 12 mit dem in dem Ausführungsbeispiel der Fig. 27 dargestellten Zahnrad 59, sorgen können.

Ausweislich der Figuren 27 und 28 soll bei einem weiteren Ausführungsbeispiel einer erfindungsgemäßen Vorrichtung 10 noch eine weitere Besonderheit erläutert werden:

Wie zuvor beschrieben, weisen sowohl das Stellglied 12 gemäß Fig. 25, als auch die Eingangsscheibe 23 eine zentrale Durchgangsbohrung 29 auf.

Diese Durchgangsbohrung 29 wird bei der zusammengesetzten Vorrichtung 10 gemäß den Figuren 27 und 28 von einem zentralen Stutzen oder Bolzen 85 durchgriffen. Der Stutzen 85 ermöglicht eine zentrale, axiale Verspannung der beiden Elemente 11 und 12 unmittelbar gegeneinander, wobei die zuvor diskutieren maßgeblichen Dichtungsflächen, also die Eingangsseite 39 des Stellgliedes 12 und die Ringstirnflächen 81, 82, 83a, 83b, 83c, 83d, 83e, 83f, 83g unmittelbar aufeinander verspannt werden. Der Stutzen 85 kann z. B. als Schraube ausgeführt sein und mit einem Sechskant-Schraubenkopf 86a und an seinem gegenüberliegenden Ende mit einem Außengewinde versehen sein, auf dem eine Schraubmutter 86b sitzt.

Der Schraubenkopf 86a kann z. B. in eine entsprechende formschlüssige Öffnung des Zahnrades 29 eingelassen sein, die sowohl einen Drehschluss zu dem Zahnrad 59 gewährleistet, als auch demgegenüber eine Axialsicherung bereitstellt. Die entsprechende Öffnung in dem Zahnrad 59 kann beispielweise als Sackbohrung ausgebildet sein, die ein Einlegen des Schraubkopfes 86a nur soweit ermöglicht, dass die Außenseite des Schraubenkopfes 86a bündig zu der Zahnradoberfläche, wie aus Fig. 27 deutlich, angeordnet ist.

Das andere Ende des Stutzens 85 kann mit einer Schraube 86b gemäß Fig. 28 versehen sein, so dass durch Drehung der Schraube 86b bei festgehaltenem Zahnrad 59 oder festgehaltener Eingangsscheibe 11, oder bei festgehaltener Vorrichtung 10 insgesamt, eine axiale Verspannung von Eingangsscheibe 11 zu dem Stellglied 12 ermöglicht wird. Durch Verwendung eines Drehmomentschlüssels kann die Axialkraft und damit die Andruckkraft sehr genau eingestellt werden.

Die unmittelbare axiale Verspannung der beiden, die jeweiligen Dichtflächen 39, bzw. 81, 82, 83 aufweisenden, Elemente 11, 12 gegeneinander ermöglicht eine optimierte Verteilung und Vergleichmäßigung der Anpresskräfte. Risiken von Unsymmetrien der Anpresskraft bezüglich der Drehachse des Stellgliedes 12 werden hierdurch minimiert.

Außerdem können störende Einflüsse zusätzlicher Teile, wie z. B. von Gehäuseteilen, auf die exakt vorherbestimmbare Anpresskraft vermieden werden.

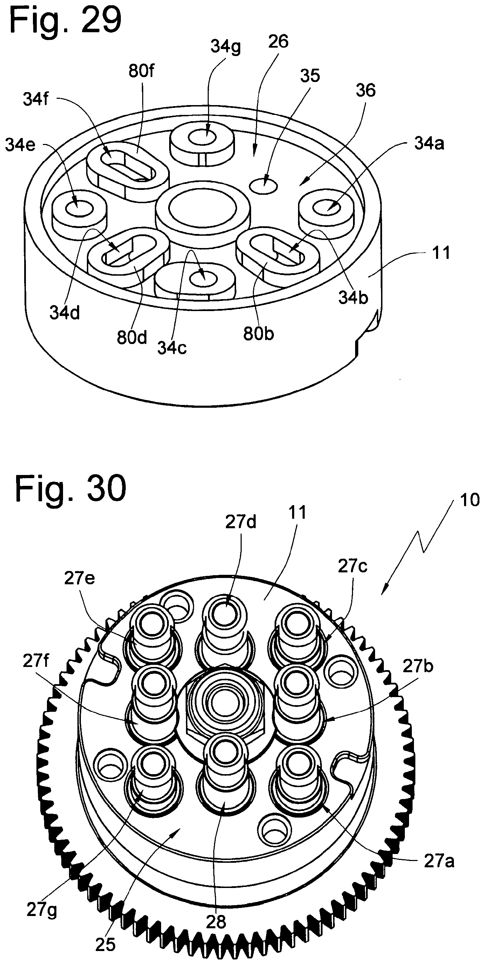

Ausweislich des Ausführungsbeispiels der Figuren 29 und 30 ist bei einer weiteren Variante einer erfindungsgemäßen Vorrichtung 10 die Eingangsscheibe 11 derartig ausgestaltet, dass die Einlassöffnungen 27a, 27b, 27c, 27d, 27e, 27f, 27g, und der Spülmitteleinlass 28 auf unterschiedlichen Radien liegen. Ausweislich Fig. 30 sind die Einlassöffnungen 27a, 27c, 27e und 27g auf einem ersten größeren Radius um die Mittelachse herum angeordnet, und die Einlassöffnungen 27b, 27d, 27f und der Spülmitteleinlass 28 auf einem zweiten, kleineren Radius angeordnet. Hierdurch kann eine geänderte Führung der Zuleitungen zu den entsprechenden Stutzen erreicht werden, die z. B. eine Anordnung ermöglicht, die einen nur geringen Einbauraum erfordert.

Die Ausgangsseite 26 der Eingangsscheibe 11 ist in Fig. 29 dargestellt. Hier sind denjenigen Materialeinlassöffnungen 34b, 34d und 34f, deren zugeordnete Einlassöffnungen 27b, 27d und 27f auf dem kleineren, inneren Radius liegen, in Radialrichtung langgestreckt ausgebildet, um eine kommunikative Verbindung mit dem Durchgangskanal 42 - eine entsprechende Drehposition des Stellgliedes 12 vorausgesetzt - zu ermöglichen. Dementsprechend sind die zugeordneten Ringbünde 80b, 80d und 80f, die diese Einlassöffnungen 34b, 34d, 34f umgeben, ebenfalls langgestreckt ausgebildet.

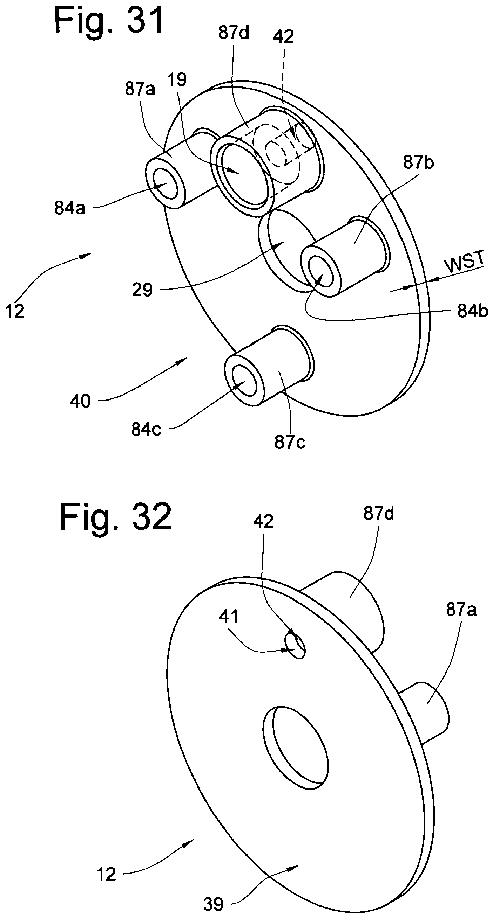

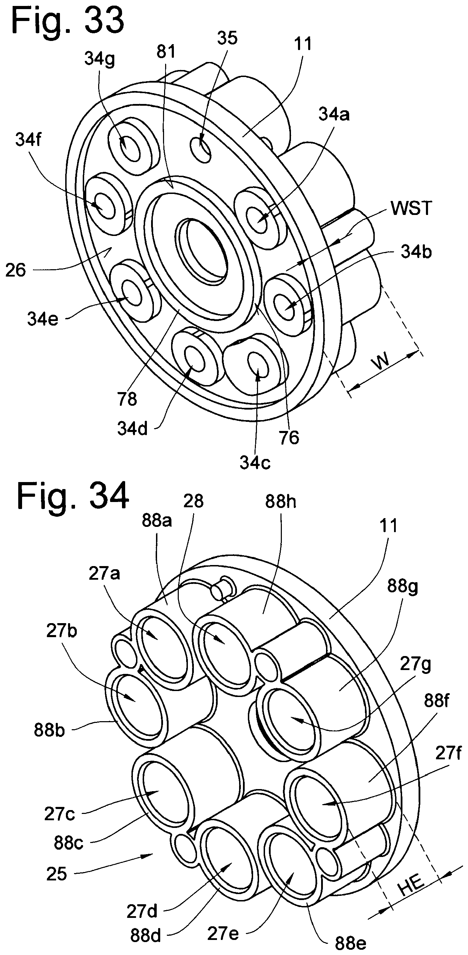

Im Folgenden wird anhand des Ausführungsbeispiels der Figuren 31 und 32 ein weiteres mögliches Stellglied 12 und anhand der Figuren 33 und 34 ein weiteres Ausführungsbeispiel einer Eingangsscheibe 11 beschrieben. Stellglied 12 und Eingangsscheibe 11 gemäß den Figuren 31 bis 34 können auch an Stelle der zuvor beschriebenen Eingangsscheibe 11 bzw. Stellglied 12 bei den anderen Ausführungsbeispielen der Erfindung eingesetzt werden.

Der Eingangsscheibe 11 gemäß den Figuren 33 und 34 und dem Stellglied 12 gemäß Figuren 31 und 32 ist gemein, dass beide Scheiben 11, 12 mit einer erheblich reduzierten Flansch-Wandstärke WST ausgestattet sind, die eine erhebliche Materialersparnis mit sich bringt. Als Bestandteil der Scheibe 12 erstrecken sich von der Ausgangsseite 40 des Stellgliedes 12 vier Stutzen 87a, 87b, 87c, 87d. Diese sind stoffschlüssig, materialeinheitlich an die Rückseite 40 des Stellgliedes 12 mit angeformt. Der Stutzen 87d stellt den Auslass 19 bereit, und weist - vergleichbar der Anordnung des Stellgliedes 12 gemäß Fig. 26 - eine Einlassöffnung zum Anschluss einer Schlauchleitung, insbesondere zum Einsetzen eines Schlauchanschlussstutzens einer Schlauchleitung auf.

Die Stutzen 87a, 87b und 87c stellen die Sackbohrungen 84a, 84b, 84c bereit, die - wie bei dem Ausführungsbeispiel der Fig. 26 - zur Positionierung, ggf. Zentrierung des Zahnrades 59 dienen können.

Bei dem Ausführungsbeispiel der Eingangsscheibe 11 gemäß den Figuren 33 und 34 erstrecken sich entsprechende Stutzen 88a, 88b, 88c, 88d, 88e, 88f, 88g, 88h von der Eingangsseite 25 der Eingangsscheibe 11 weg. Die entsprechenden Stutzen stellen die Einlassöffnungen 27a, 27b, 27c, 27d, 27e, 27f, 27g bereit. Der Stutzen 88h stellt den Spülmitteleinlass 28 bereit.

Die Gesamtwandstärke W der Eingangsscheibe 11 (Fig. 33) kann der Wandstärke W einer Eingangsscheibe nach den vorherigen Ausführungsbeispielen, beispielsweise gemäß Fig. 5, entsprechen. Die Scheibe 11 gemäß Fig. 33 hat somit eine Wandstärke W, die sich aus der Summe der Flansch-Wandstärke WST des kreisförmigen Bereiches und der Höhe HE eines Stutzens 88 zusammensetzt.

Dadurch, dass die einzelnen Einlässe 27a, 27b, 27c, 27d, 27e, 27f, 27g, der Spülmitteleinlass 28 und der Auslass 19 jeweils von einem Stutzen bereit gestellt sind, wird einerseits eine erhebliche Materialersparnis ermöglicht. Andererseits ergeben sich hierdurch auch einige konstruktionstechnische und herstellungstechnische Vorteile, insbesondere die Möglichkeit, auf unterschiedliche Herstellungsverfahren für die beiden Scheiben 11 und 12 zurück greifen zu können.

Gemäß einer vorteilhaften Ausgestaltung der Erfindung können die einzelnen Stutzen 87d und 88a, 88b, 88c, 88d, 88e, 88f, 88g, 88h auch derartig ausgebildet sein, dass sie unmittelbar den Angriff einer Schlauchleitung ermöglichen. Hierzu können beispielsweise die freien Ränder der Stutzen 88a, 88b, 88c, 88d, 88e, 88f, 88g, 88h, sowie 87d mit konischen Anlaufschrägen versehen sein.

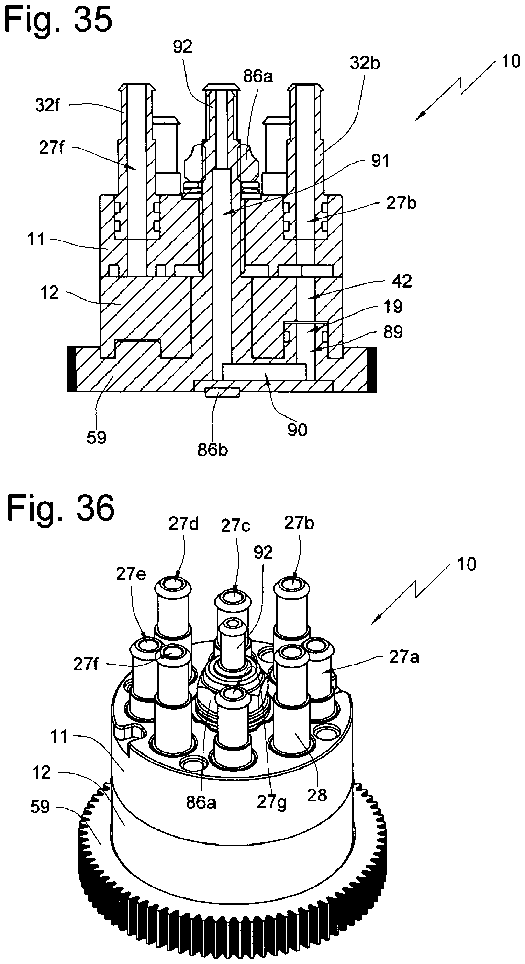

Die einzelnen Stutzen 88 können auf diese Weise an ihrem freien Endbereich so ausgebildet sein, wie beispielsweise der in Fig. 35 mit 32f bezeichnete Schlauchanschlussstutzen an seinem freien Ende ausgebildet ist.

Alternativ kann, wie dies in den Figuren 31 bis 34 dargestellt ist, auch vorgesehen sein, dass an den Schlauchleitungen befestigte gesonderte Schlauchanschluss-Stutzen, wie beispielsweise in Fig. 11 dargestellt und dort mit 32 bezeichnet, in die jeweilige Öffnung 27a, 27b, 27c, 27d, 27e, 27f, 27g und 28 des Stutzen 88a, 88b, 88c, 88d, 88e, 88f, 88g, 88h eingesteckt und/oder eingepresst werden.

Anhand der Figuren 35 und 36 wird nachfolgend noch ein weiteres Ausführungsbeispiel einer erfindungsgemäßen Vorrichtung 10 beschrieben. Hier ist wiederum eine konzentrische Stapelanordnung einer Eingangsscheibe 11, eines Stellgliedes 12 und eines Zahnrades 59 getroffen. Der im Stellglied 12 angeordnete Durchgangskanal 42 mündet in einen Auslass 19 des Stellgliedes 12. Diesem Auslass 19 gegenüber liegend, ist ein Einlass 89 eines radialen Kanals 90 angeordnet, der sich innerhalb des Zahnrades 59 befindet. Das Zahnradelement, welches auch als Deckelelement bezeichnet werden kann, sieht eine axial, innerhalb eines Hohldorns verlaufende Rückführung des Mediums durch einen zentralen Rückführkanal 91 vor. Dieser mündet im Bereich der Eingangsscheibe 11, an dessen Eingangsseite 25, in einen Auslassstutzen 92. Der Hohldorn ist einstückig mit dem Zahnrad 59 ausgebildet.

Bei dieser Ausgestaltung der Erfindung können sämtliche Anschlüsse an der Eingangsseite 25 der Eingangsscheibe 11 vorgesehen werden.

Das mit 59 bezeichnete Zahnrad, welches auch als Deckelelement oder Rückführungselement bezeichenbar ist, dient also auch dazu, den an dem Stellglied 12 angeordneten Auslass 19 unter Zuhilfenahme der Kanäle 90, 91 mit einer Mündungsöffnung 92 an der Eingangsseite 25 der Eingangsscheibe 11 zu verbinden, um dort einen vereinfachten Anschluss der Schlauchleitungen zu ermöglichen, und um bei beengten Bauraumverhältnissen die Vorrichtung 10 unterbringen zu können.

Fig. 35 zeigt ein Ausführungsbeispiel bei dem der Durchgangskanal 42 geradlinig ausgebildet ist. Der in dem Zahnradelement 59 angeordnete, aus radialem Kanal 90 und Rückführkanal 91 gebildete Kanal weist aber Ecken auf. Eine solche, Ecken und damit Totraumbereiche aufweisende Kanalkonstruktion ist aber nur für Anwendungen geeignet, bei denen die zu fördernden Medien sich auf Grund ihrer Eigenschaften nicht in Eckbereichen ansammeln, oder bei denen eine Mischung der Medien nicht von Nachteil ist. Ein Beispiel für einen solchen Anwendungsfall sind unterschiedliche ätherische Öle, die als Medien dem Dampfstrom einer Sauna zugeführt werden.

Das Ausführungsbeispiel der Fig. 35 zeigt ein Zahnrad 59. Bei anderen Ausführungsbeispielen, die nicht dargestellt sind, ist das Element 59 ebenfalls als Antriebselement für das Stellglied, also als Drehmitnahmeelement für das Stellglied, ausgebildet, und kann auf eine andere Weise, als unter Zuhilfenahme eines äußeren Zahnkranzes, angetrieben werden.

Bei wiederum weiteren, nicht dargestellten Ausführungsbeispielen ist dieses Antriebselement 59 mit einem zentralen Dorn, ähnlich wie in Fig. 35 dargestellt, versehen, der einstückig an dem Antriebselement angeordnet ist, allerdings ohne, dass darin ein Rückführungskanal 91 angeordnet ist. In diesen Fällen dient der Dorn dazu, die zentralen Bohrungen 29 im Stellglied 12 und Eingangsscheibe 19 zu durchgreifen, und eine axiale Verspannung der beiden Scheiben 11, 12 gegeneinander, und gegen eine Anschlagfläche an dem Antriebselement zu ermöglichen. Hierdurch kann, wie das Ausführungsbeispiel der Fig. 35 zeigt, das freie Ende des Dorns mit einem Außengewinde versehen sein, an dem eine Schraubmutter 86a angeordnet ist, die die Eingangsscheibe 11 gegen das Stellglied 12 axial verspannt.

## Patentansprüche

1. Vorrichtung (10) mit mehreren, an einer Eingangsscheibe (11) angeordneten Einlässen (27a, 27b, 27c, 27d, 27e, 27f, 28) und mit einem einzigen Auslaß (19), wobei die Einlässe (27a, 27b, 27c, 27d, 27e, 27f, 28) jeweils mit einem Material-Vorrats-Behältnis (13a, 13b, 13c, 13d, 13e, 13f) verbindbar sind, und wobei zur Bereitstellung einer schaltbaren Verbindung zwischen jeweils einem der mehreren Einlässe und dem Auslaß ein relativ zu den Einlässen verlagerbares Stellglied (12) mit einem einzigen, sich von einer Eingangsseite (39) des Stellgliedes zu einer Ausgangsseite (40) des Stellgliedes erstreckenden Durchgangskanal (42) vorgesehen ist, wobei der Durchgangskanal wahlweise mit jeweils einem der unterschiedlichen Einlässe in kommunikative Verbindung bringbar ist, um dem Auslaß sukzessive unterschiedliche Materialien zuführen zu können, wobei wenigstens einer der Einlässe (28) als Spülmitteleinlass einer Spüleinrichtung (47) ausgebildet ist, und wobei der Durchgangskanal infolge einer Verlagerung des Stellgliedes (12) zum Zwecke der Spülung des Durchgangskanals (42) mit dem Spülmitteleinlass in kommunikative Verbindung bringbar ist, wobei die Eingangsscheibe (11) auf ihrer dem Stellglied (12) zugewandten Seite (26) eine der Zahl der Einlässe (27a,27b,27c,27d,27e,27f,28) entsprechende Zahl von Öffnungen (34a,34b,34c,34d,34e,34f,35) und eine mit dem Spülmitteleinlass (28) kommunizierende Nut-Anordnung (36) aufweist, und wobei die Nut-Anordnung (36) Bereiche (38a,38b,38c,38d,38e) aufweist, die zwischen jeweils zwei der mit einem Material-Vorrats-Behältnis verbindbaren Öffnungen (34a,34b,34c,34d,34e,34f) vorgesehen sind.

## Claims

1. Device (10) with a plurality of inlets (27a, 27b, 27c, 27d, 27e, 27f) arranged on an input disc (11) and with only one outlet (19), whereby each of the inlets (27a, 27b, 27c, 27d, 27e, 27f) is connectable to a material reservoir (13a, 13b, 13c, 13d, 13e, 13f), and whereby an actuator having only one passage duct (42) extending from its inlet side (39) to its outlet side (40) is provided that is displaceable relative to the inlets to provide a switchable connection between respectively one of the various inlets and the outlet, whereby the passage duct can optionally be brought into a communitive connection with one of the different respective inlets to enable feeding of different materials successively to the outlet, whereby at least one of the inlets (28) is constructed as a flushing medium inlet of a flushing device (47), and whereby the passage duct can be brought into a communitive connection with the flushing medium inlet by displacement of the actuator (12) for the purpose of flushing the passage duct (42), whereby a number of inlets (27a, 27b, 27c, 27d, 27e, 27f, 28) equal to the number of outlets (34a, 34b, 34c, 34d, 34e, 34f, 35) is disposed on the side of the input disc (11) facing the actuator (12) and having a groove arrangement (36) that communicates with the flushing medium inlet (28), the groove arrangement having portions (38a, 38b, 38c, 38d, 38e), which are provided between each two openings (34a, 34b, 34c, 34d, 34e, 34f) that can be connected with the material reservoir.

## Revendications

1. Dispositif (10) avec plusieurs orifices d'entrée (27a, 27b, 27c, 27d, 27e, 27f, 28) disposés au niveau d'un disque d'entrée (11) et avec un seul orifice de sortie (19), les orifices d'entrée (27a, 27b, 27c, 27d, 27e, 27f, 28) pouvant être raccordés respectivement à un réservoir de réserve de matière (13a, 13b, 13c, 13d, 13e, 13f), et un élément de réglage (12), pouvant se déplacer par rapport aux orifices d'entrée, avec un seul canal de passage (42), s'étendant d'une face d'entrée (39) de l'élément de réglage à une face de sortie (40) de l'élément de réglage, étant prévu pour fournir un raccordement sélectionnable entre l'un de plusieurs orifices d'entrée et l'orifice de sortie, ledit canal de passage pouvant être mis en communication, de manière sélective, avec l'un des différents orifices d'entrée afin de pouvoir acheminer des matières successives différentes vers l'orifice de sortie, au moins un des orifices d'entrée (28) étant réalisé en tant qu'orifice d'entrée de produit de rinçage d'un dispositif de rinçage (47) et le canal de passage pouvant être mis en communication avec l'orifice d'entrée de produit de rinçage après un déplacement de l'élément de réglage (12) aux fins du rinçage du canal de passage (42), le disque d'entrée (11) comportant, sur sa face (26) orientée vers l'élément de réglage (12), un nombre, correspondant au nombre d'orifices d'entrée (27a, 27b, 27c, 27d, 27e, 27f, 28), d'orifices (34a, 34b, 34c 34d, 34e, 34f, 35) et un agencement de rainures (36) communiquant avec l'orifice d'entrée de produit de rinçage (28), et l'agencement de rainures (36) présentant des zones (38a, 38b, 38c, 38d, 38e) qui sont prévues, entre respectivement deux des orifices (34a, 34b, 34c, 34d, 34e, 34f) raccordables à un réservoir de réserve de matière.
